# EUROPEAN PATENT APPLICATION

(11) **EP 4 411 630 A1**
(43) Date of publication of application: **07.08.2024**
(21) Application number: 21958445.5
(22) Date of filing: 27.09.2021
(51) Int. Cl.: G06T 7/00

(54) **AUTHENTICATION SYSTEM, AUTHENTICATION DEVICE, AUTHENTICATION METHOD, AND RECORDING MEDIUM**

(71) Applicant: NEC Corporation, 108-8001 Tokyo (JP)
(72) Inventor: OAMI, Ryoma, Tokyo 108-8001 (JP)
(74) Representative: Betten & Resch
(86) International application number: PCT/JP2021/035343
(87) International publication number: WO 2023/047572

(57) **Abstract**

An authentication system (10) comprises: an image acquiring means (110) for acquiring a plurality of images by capturing an eye of a target wearing colored contact lenses (50) from multiple angles; and an iris authentication means (120) for performing iris authentication for the target by using the plurality of images. According to such the authentication system, it is possible to appropriately perform iris authentication even if a target wears colored contact lenses.

## Description

### Technical Field

This disclosure relates to an authentication system, an authentication apparatus, an authentication method and a recording medium.

### Background

As this type of system, a system performing biometric authentication by using an iris image of a target (i.e., iris authentication) is known. For example, a patent literature 1 discloses a technique extracting a feature by excluding a peripheral part of an iris when it is determined that a user wears colored contact lenses. A patent literature 2 discloses a technique capturing image of all circumference of a pupil when a user wears contact lenses. A patent literature 3 discloses a technique specifying colored pattern or the like of a colored contact lens, and performing an authentication processing by excluding an area corresponding to the specified colored pattern.

As other associated techniques, a patent literature 4 discloses stitching iris images observed from different directions, a patent literature 5 discloses using a structural feature of iris images when iris images are synthesized.

### Citation List

### Patent Literature

Patent Literature 1: International Publication No. 2019/044943
Patent Literature 2: International Publication No. 2017/010305
Patent Literature 3: International Publication No. 2020/065935
Patent Literature 4: Japanese Patent Application Laid Open No. 2017-526079
Patent Literature 5: Japanese Patent Application Laid Open No. 2012-519927

### Summary

### Technical Problem

This disclosure aims to improve techniques disclosed in prior art documents.

### Solution to Problem

One aspect of an authentication system of this discloser comprises: an image acquiring means for acquiring a plurality of images by capturing an eye of a target wearing colored contact lenses from multiple angles; and an iris authentication means for performing iris authentication for the target by using the plurality of images.

One aspect of an authentication apparatus of this disclosure comprises: an image acquiring means for acquiring a plurality of images by capturing an eye of a target wearing colored contact lenses from multiple angles; and an iris authentication means for performing iris authentication for the target by using the plurality of images.

One aspect of an authentication method of this disclosure is an authentication method executed by at least one computer, wherein the authentication method comprises: acquiring a plurality of images by capturing an eye of a target wearing colored contact lenses from multiple angles; and performing iris authentication for the target by using the plurality of images.

One aspect of a recoding medium of this disclosure records a computer program making at least one computer execute an authentication method comprising: acquiring a plurality of images by capturing an eye of a target wearing colored contact lenses from multiple angles; and performing iris authentication for the target by using the plurality of images

### Brief Description of Drawings

[FIG. 1] FIG. 1 is a block diagram showing a hardware configuration of an authentication system of a first embodiment.
[FIG. 2] FIG. 2 is a block diagram showing a functional configuration of the authentication system of the first embodiment.
[FIG. 3A] FIG. 3A is a top view showing examples of a capturing direction and a gaze direction when an oblique image is captured.
[FIG. 3B] FIG. 3B is a top view showing examples of a capturing direction and a gaze direction when an oblique image is captured.
[FIG. 3C] FIG. 3C is a top view showing examples of a capturing direction and a gaze direction when an oblique image is captured.
[FIG. 4A] FIG. 4A is a side view showing examples the capturing direction and the gaze direction when the oblique image is captured.
[FIG. 4B] FIG. 4B is a side view showing examples the capturing direction and the gaze direction when the oblique image is captured.
[FIG. 4C] FIG. 4C is a side view showing examples the capturing direction and the gaze direction when the oblique image is captured.
[FIG. 5] FIG. 5 is a flowchart showing flow of operation of the authentication system of the first embodiment.
[FIG. 6A] FIG. 6A is a plane view showing an example of an iris visible area when colored contact lenses are worn.
[FIG. 6B] FIG. 6B is a plane view showing an example of an iris visible area when colored contact lenses are worn.
[FIG. 7A] FIG. 7A is a plane view showing variation of the iris visible area depending on the gaze direction.
[FIG. 7B] FIG. 7B is a plane view showing variation of the iris visible area depending on the gaze direction.
[FIG. 7C] FIG. 7C is a plane view showing variation of the iris visible area depending on the gaze direction.
[FIG. 7D] FIG. 7D is a plane view showing variation of the iris visible area depending on the gaze direction.
[FIG. 8] FIG. 8 is a block diagram showing a functional configuration of an authentication system of a second embodiment.
[FIG. 9] FIG. 9 is a flowchart showing flow of operation of the authentication system of the second embodiment.
[FIG. 10] FIG. 10 is a block diagram showing a functional configuration of an authentication system of a third embodiment.
[FIG. 11] FIG. 11 is a flowchart showing flow of operation of the authentication system of the third embodiment.
[FIG. 12] FIG. 12 is a flowchart showing flow of operation of an authentication system of a fourth embodiment.
[IFG. 13] FIG. 13 is a block diagram showing a functional configuration of an authentication system of a fifth embodiment.
[FIG. 14] FIG. 14 is a flowchart showing flow of operation of the authentication system of the fifth embodiment.
[FIG. 15] FIG. 15 is a flowchart showing flow of operation of an authentication of a sixth embodiment.
[FIG. 16] FIG. 16 is a block diagram showing a functional configuration of an authentication system of a seventh embodiment.
[FIG. 17] FIG. 17 is a flowchart showing flow of operation of the authentication system of the seventh embodiment.
[FIG. 18] FIG. 18 is a block diagram showing a functional configuration of an authentication system of a eighth embodiment.
[FIG. 19] FIG. 19 is a flowchart showing flow of operation of the authentication system of the eighth embodiment.
[FIG. 20] FIG. 20 is a block diagram showing a functional configuration of an authentication system of a ninth embodiment.
[FIG. 21] FIG. 21 is a flowchart showing flow of operation of the authentication system of the ninth embodiment.
[FIG. 22] FIG. 22 is a block diagram showing a functional configuration of an authentication system of tenth embodiment.
[FIG. 23] FIG. 23 is a flowchart showing flow of operation of the authentication system of the tenth embodiment.
[FIG. 24A] FIG. 24A is a plane view (part 1) showing an example of a guiding indication for guiding the gaze direction.
[FIG. 24B] FIG. 24B is a plane view (part 1) showing an example of a guiding indication for guiding the gaze direction.
[FIG. 25A] FIG. 25A is a plane view (part 2) showing an example of the guiding indication for guiding the gaze direction.
[FIG. 25B] FIG. 25B is a plane view (part 2) showing an example of the guiding indication for guiding the gaze direction.
[FIG. 26] FIG. 26 is a block diagram showing a functional configuration of an authentication system of an eleventh embodiment.
[FIG. 27] FIG. 27 is a flowchart showing flow of operation of the authentication system of the eleventh embodiment.
[FIG. 28] FIG. 28 is a block diagram showing a functional configuration of an authentication system of a twelfth embodiment.
[FIG. 29] FIG. 29 is a flowchart showing flow of operation of the authentication system of the twelfth embodiment.
[FIG. 30] FIG. 30 is a block diagram showing a functional configuration of an authentication system of a thirteenth embodiment.
[FIG. 31] FIG. 31 is a flowchart showing flow of operation of the authentication system of the thirteenth embodiment.
[FIG. 32] FIG. 32 is a block diagram showing a functional configuration of an authentication system of a fourteenth embodiment.
[FIG. 33] FIG. 33 is a flowchart showing flow of operation of the authentication system of the fourteenth embodiment.
[FIG. 34] FIG. 34 is a block diagram showing a functional configuration of an authentication system of a fifteenth embodiment.
[FIG. 35] FIG. 35 is a flowchart showing flow of storing operation of the authentication system of the fifteenth embodiment.
[FIG. 36] FIG. 36 is a flowchart showing flow of authentication operation of the authentication system of the fifteenth embodiment.
[FIG. 37] FIG. 37 is a block diagram showing a functional configuration of an authentication system of a sixteenth embodiment.
[FIG. 38] FIG. 38 is a flowchart showing flow of operation of the authentication system of the sixteenth embodiment.
[FIG. 39] FIG. 39 is a block diagram showing a functional configuration of an authentication system of a seventeenth embodiment.
[FIG. 40] FIG. 40 is a plane view showing a position relationship of a plurality of cameras controlled by the authentication system of the seventeenth embodiment.
[FIG. 41] FIG. 41 is a block diagram showing a functional configuration of an authentication system of an eighteenth embodiment.
[FIG. 42] FIG. 42 is a flowchart showing flow of operation of the authentication system of the eighteenth embodiment.

### Description of Embodiments

In the following, embodiments of authentication systems, authentication apparatus, authentication methods and recording media will be described with referring to drawings.

### <First Embodiment>

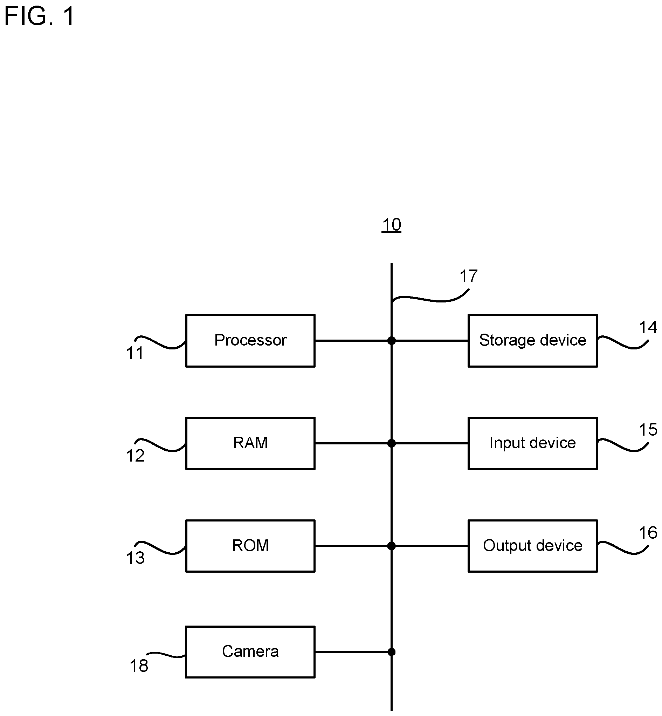

An authentication system of a first embodiment will be described with referring to FIGS. 1 to 7D.

### (Hardware configuration)

First, a hardware configuration of the authentication system of the first embodiment will be described with referring to FIG. 1. FIG. 1 is a block diagram showing the hardware configuration of the authentication system of the first embodiment.

As shown in FIG. 1, the authentication system 10 of the first embodiment comprises a processor 11, a RAM (Random Access Memory) 12, a ROM (Read Only Memory) 13 and a storage device 14. The authentication system 10 may further comprise an input device 15 and an output device 16. The authentication system 10 may also comprise a camera 18. The processor 11, the RAM 12, the ROM 13, the storage device 14, the input device 15 and the output device 16 are connected through a data bus 17.

The processor 11 reads computer programs. For example, the processor 11 is configured to read a computer program stored in at least one of the RAM 12, the ROM 13 and the storage device 14. The processor 11 may read a computer program, which is recorded on a computer-readable recording medium, by using a recording media reading apparatus not shown. The processor 11 may acquire (i.e., read) a computer program from an apparatus, which is located in external to the authentication system 10 and which is not shown, through a network interface. The processor 11 controls the RAM 12, the storage device 14, the input device 15 and the output device 16 by executing a read computer program. In this embodiment, in particular, functional blocks for performing iris authentication by capturing images of a target is realized in the processor 11 when the processor 11 executes a read computer program.

The processor 11 may be configured as a CPU (Central Processing Unit), a GPU (Graphics Processing Unit), an FPGA (Field-Programmable Gate Array), a DSP (Digital Signal Processor), an ASIC (Application Specific Integrated Circuit), for example. The processor 11 may be configured by one of these, or configured to use several of these in parallel.

The RAM 12 temporarily stores computer programs executed by the processor 11. The RAM 12 temporarily stores data temporarily used by the processor 11 when the processor 11 executes a computer program. The RAM 12 may be a D-RAM (Dynamic RAM), for example.

The ROM 13 stores computer programs executed by the processor 11. The ROM 13 may store fixed data in addition to computer programs. The ROM 13 may be a P-ROM (Programmable ROM), for example.

The storage device 14 stores data, which is stored for a long time by the authentication system 10. The storage device 14 may work as a temporary storage device of the processor 11. The storage device 14 may include at least one of a hard-disk apparatus, a light-magnetic disc apparatus, an SSD (Solid State Drive) and a disk array apparatus, for example.

The input device 15 is a device receiving input instructions from a user of the authentication system 10. The input device 15 may include at least one of a keyboard, a mouse and a touch panel, for example. The input device 15 may be configured as a mobile terminal such as a smartphone, a tablet or the like.

The output device 16 is a device outputting information in associated with the authentication system 10 to external. The output device 16 may be a display apparatus (e.g., a display) which can display information in associated with the authentication system 10, for example. The output device 16 may be a speaker or the like which can output audio corresponding to information in associated with the authentication system 10. The output device 16 may be configured as a mobile terminal such as a smartphone, a tablet or the like.

The camera 18 is a camera set at a place, where images of a target (specifically, images of an area around an eye including an iris of the target) can be captured. There may be a plurality of cameras 18. The camera 18 may be a camera attached to a terminal (e.g., a smartphone) which is owned by a target. The camera 18 may be an USB camera, an IP camera, a Web camera or the like. The camera 18 may be a camera capturing still images, or a camera capturing video. The camera 18 may be configured as a visible-light camera, or configured as a near infrared camera. Targets of the camera 18 may include not only humans but also animals such as dogs, snakes or the like, robots or the like.

FIG. 1 shows the example of the authentication system 10 configured to include multiple devices. All of or a part of functions of the authentication system 10 may be realized by one apparatus (an authentication apparatus). This authentication apparatus may be configured from, for example, the processor 11, the RAM 12 and the ROM 13 described above. Other components (i.e., the storage device 14, the input device 15, the output device 16 and the camera 18) may be included in an external apparatus, which is connected to the authentication apparatus, for example. The authentication apparatus may be an apparatus, which makes an external apparatus (e.g., an external server, a cloud or the like) perform a part of arithmetic operation.

### (Functional configuration)

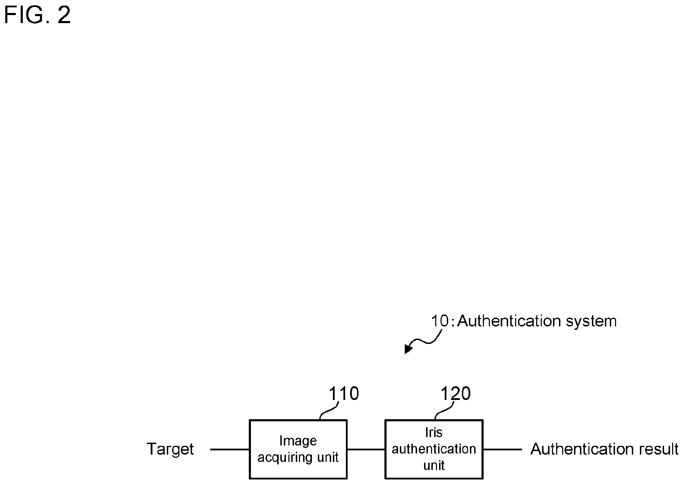

Next, a functional configuration of the authentication system 10 of the first embodiment will be described with referring to FIG. 2. FIG. 2 is a block diagram showing the functional configuration of the authentication system of the first embodiment.

As shown in FIG. 2, the authentication system 10 of the first embodiment is configured to comprise, as components for realizing its functions, an image acquiring unit 110 and an iris authentication unit 120. Each of the image acquiring unit 110 and the iris authentication unit 120 may be a processing block realized by the above-mentioned processor 11 (see FIG. 1), for example. The image acquiring unit 110 may be a unit acquiring images by using the above-mentioned camera 18.

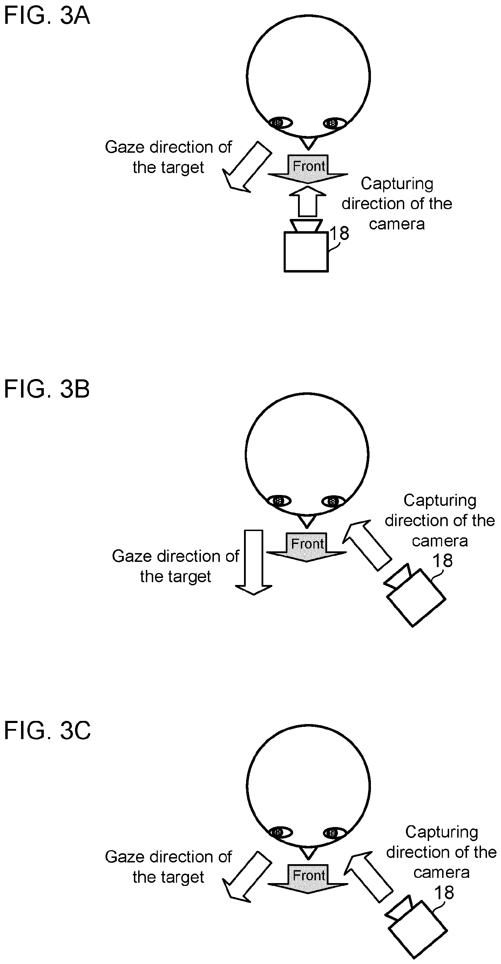

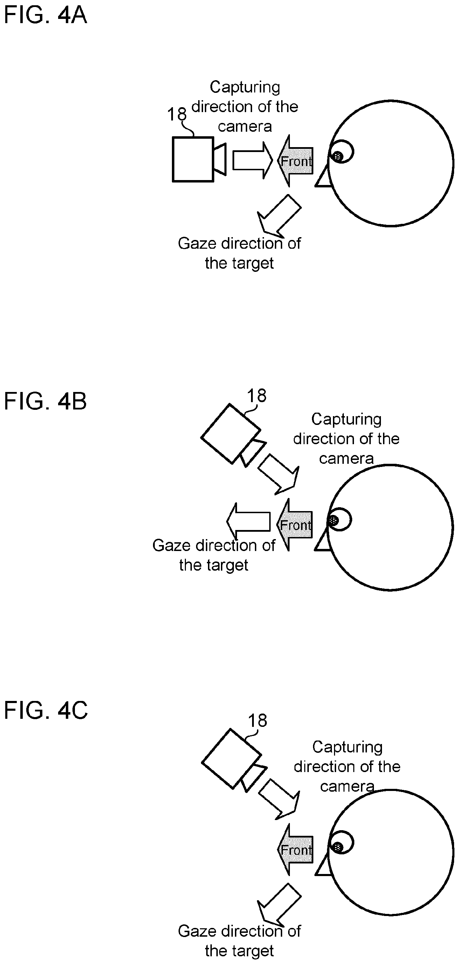

The image acquiring unit 110 is configured to be able to acquire an iris image of a target (i.e., an image including an iris of the target). The iris image may be acquired as a near infrared image, for example. In this case, the image acquiring unit 110 may be configured to be able to irradiate near infrared light to the target. The image acquiring unit 110 of this embodiment, in particular, is configured to be able to acquire a plurality of iris images by capturing an eye of a target wearing colored contact lenses from multiple angles. Incidentally, the "colored contact lens", here, is a contact lens which is colored or on which a pattern is drawn, and is called a colored contact lens or a cosmetic contact lens, for example. Most of colored contact lenses, normally, do not have a pattern at a center portion, and have a pattern, which is printed on a doughnut-like area, which does not include the center portion. Therefore, an inner border of a pattern area of a colored contact lens can be called as inner circle (i.e., a virtual circle indicating a pattern border; a circle is not drawn actually), hereinafter. The plurality of iris images may be images in which imaging angles to an iris of a target are different from each other. The plurality of iris images may include a front image in which a face of a target is captured from the front, and an oblique image in which the face of the target is captured from a diagonal direction. Incidentally, the "front", here, is a direction when the face of the target directs straight in front, and the "oblique" is a direction other than the front (see FIGS. 3A, 3B, 3C, 4A, 4B and 4C described later). The plurality of iris images may be images that are captured while changing a gaze direction (in other words, a direction of an eyeball) from the front of a face of a target. The plurality of iris images may be images that are captured while changing both of a gaze direction or a face direction, and an image angle. The authentication system 10 is configured that the plurality of iris images acquired by the image acquiring unit 110 are outputted to the iris authentication unit 120.

Here, a capturing direction and a gaze direction when iris images (especially, the oblique image) are captured will be specifically described with referring to FIGS. 3A, 3B, 3C, 4A, 4B and 4C. FIGS. 3A, 3B and 3C are a top view showing examples of a capturing direction and a gaze direction when an oblique image is captured. FIGS. 4A, 4B and 4C are a side view showing examples the capturing direction and the gaze direction when the oblique image is captured.

As shown in FIG. 3A, an oblique image of an eye of a target can be captured when the camera 18 is placed in front of a face of the target, and then a gaze direction of the target is directed to the left of the camera 18. As shown in FIG. 3B, an oblique image of the eye of the target can be captured by placing the camera 18 on the right side toward the face of the target when the gaze direction of the target is the front direction of the target. As shown in FIG. 3C, an image of the eye of the target can be captured from more diagonal angle by placing the camera 18 on the right side toward the face of the target and directing the gaze direction of the target to the left side toward the face of the target, which is an opposite side of the camera 18.

As shown in FIG. 4A, an oblique image of the eye of the target can be captured when the camera 18 is placed in front of the target, and then the gaze direction of the target is directed to the lower side. As shown in FIG. 4B, an oblique image of the eye of the target can be captured by placing the camera 18 above the front of the face of the target when the gaze direction of the target is the front direction of the target. As shown in FIG. 4C, an image of the eye of the target can be captured from more diagonal angle by placing the camera 18 above the front of the face of the target and directing the gaze direction of the target to the lower side, which is an opposite side of the camera 18.

Return to FIG. 2, the iris authentication unit 120 is configured to be able to perform iris authentication (i.e., biometric authentication by using information associated with an iris) by using the plurality of iris images acquired by the image acquiring unit 110. The iris authentication unit 120 may have a function for extracting features from the plurality of iris images. The iris authentication unit 120 may be configured to be able to perform a mask processing to a portion which is not used for authentication in the iris authentication (e.g., a portion other than an iris). The iris authentication unit 120 may generate a piece of information (e.g., an image, a feature), and perform iris authentication by using the piece of information. Specifically, authentication methods performed by the iris authentication unit 120 will be described in detail in other embodiments described later. The iris authentication unit 120 may be configured to be able to output an authentication result of the iris authentication by using the outputting device 16 (see FIG. 1), for example.

### (Flow of operation)

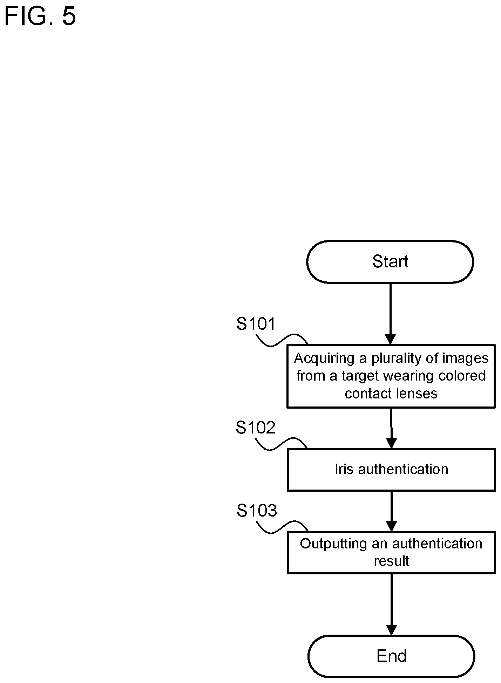

Next, flow of operation of the authentication system 10 of the first embodiment will be described with referring to FIG. 5. FIG. 5 is a flowchart showing the flow of the operation of the authentication system of the first embodiment.

As shown in FIG. 5, when the authentication system 10 of the first embodiment operates, first, the image acquiring unit 110 acquires a plurality of iris images of a target wearing colored contact lenses (step S101). Incidentally, a number of the plurality of iris images may be a predetermined number set in advance, or may be appropriately changed in accordance with a condition of a target, a condition of a captured iris image or the like.

Then, the iris authentication unit 120 performs iris authentication by using the plurality of iris images acquired by the image acquiring unit 110 (step S 102). The iris authentication unit 120 outputs an authentication result of the iris authentication (step S103). When the iris authentication is one-to-N authentication, the iris authentication unit 120 may output, for example, an ID of a person whose matching score is the highest as the authentication result. The iris authentication unit 120 may output an authentication result indicating that the target does not match any of registered users when a match score does not reach a predetermined threshold value. When the iris authentication is one-to-one authentication, the iris authentication unit 120 may match the target with registered information of a designated person, and then may output a result indicating authentication successful if a match score reaches a predetermined threshold value or a result indicating authentication failure if the match score does not reach the predetermined threshold value. The authentication result may be presented to users (e.g., a target, a system administrator or the like). The authentication result may be outputted to other apparatuses, and then may be used for various processing (e.g., payment processing, gate unlocking processing or the like).

### (Iris visible area)

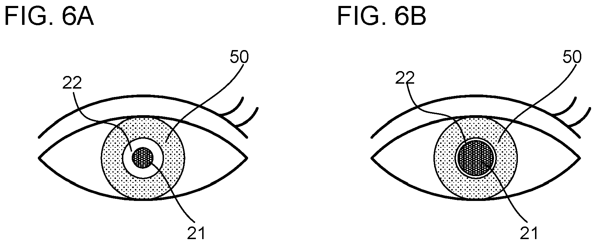

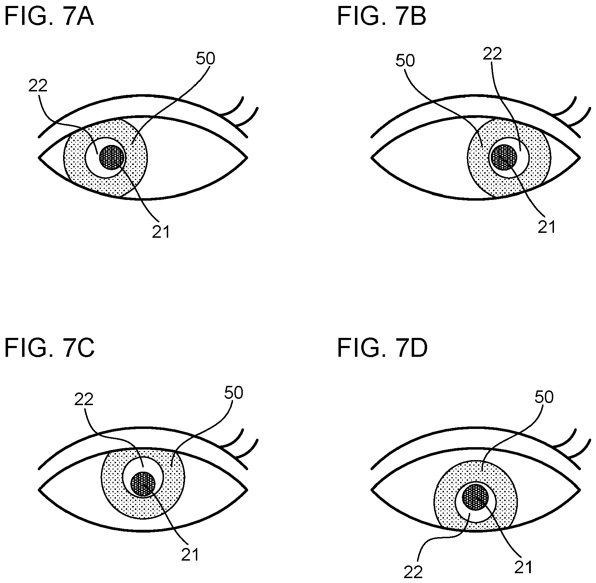

Next, an iris visible area (i.e., an area which can be visually recognized by the camera 18), when a target wears colored contact lenses, will be specifically described with referring to FIGS. 6A, 6B, 7A, 7B, 7C and 7D. FIGS. 6A, and 6B are a plane view showing an example of an iris visible area when colored contact lenses are worn. FIGS. 7A, 7B, 7C and 7D are a plane view showing variation of the iris visible area depending on the gaze direction.

As shown in FIGS. 6A and 6B, even when a target wears a colored contact lens 50, a gap between a pupil 21 and the colored contact lens 50 exists, therefore, an iris 22 can be seen from the gap (in this case, an area of the iris 22, which can be seen from the gap, is the iris visible area). However, a size of this iris visible area is changed according to a size of the colored contact lens 50, a size of a pupil (in other words, degree of contraction) or the like. As shown in FIG. 6A, when a size of the pupil 21 is relatively small, the iris visible area becomes large. On the other hand, when the size of the pupil 21 is relatively large, the iris visible area becomes small.

Here, the iris 22 is planer. On the other hand, the colored contact lens is spherical surface shape since the colored contact lens covers a cornea. Therefore, when an eye is captured from oblique by slightly changing an angle from the front, the iris visible area changes due to a depth difference between the colored contact lens 50 and the iris 22. Specifically, since the gap between the colored contact lens 50 and the iris 22 becomes uneven, an area of the iris 22, which is not seen from the front, becomes visible.

FIGS. 7A, 7B, 7C and 7D indicate visual aspects of the iris when a gaze directs to right, left, up and down, respectively. As described above, since the iris is planer, and places at a position which is deeper than a position of the colored contact lens 50 in the eye, the iris visible area changes according to a gaze direction. Therefore, it is possible to acquire information of different areas of the iris 22 by capturing while changing an angle to the eye. It is possible to acquire more information about the iris 22 in comparison with capturing from the front only once, for example.

### (Technical effects)

Next, technical effects obtained by the authentication system 10 of the first embodiment will be described.

As described with referring to FIGS. 1 to 7D, in the authentication system 10 of the first embodiment, a plurality of iris images are acquired by capturing an eye of a target wearing a colored contact lenses from a plurality angles. Therefore, since it is possible to acquire more information about the iris 22, information which can be used for an iris authentication increase. As a result, it is possible to improve accuracy of the iris authentication by synthesizing information obtained from the plurality of iris images.

Incidentally, the iris visible area may be changed by irradiating visible light to a pupil. In other words, it is possible to make the iris visible area become large by making a size of the pupil contract. However, in this case, there is a case where a pupil only slightly contracts according to a person since the size of the pupil changes hardly when a surrounding environment is bright. Additionally, there is a person who feels uncomfortable with glare. On the other hand, according to the authentication system 10 of this embodiment, it is possible to properly acquire information about the iris 22 while avoiding inconvenience described above.

### <Second Embodiment>

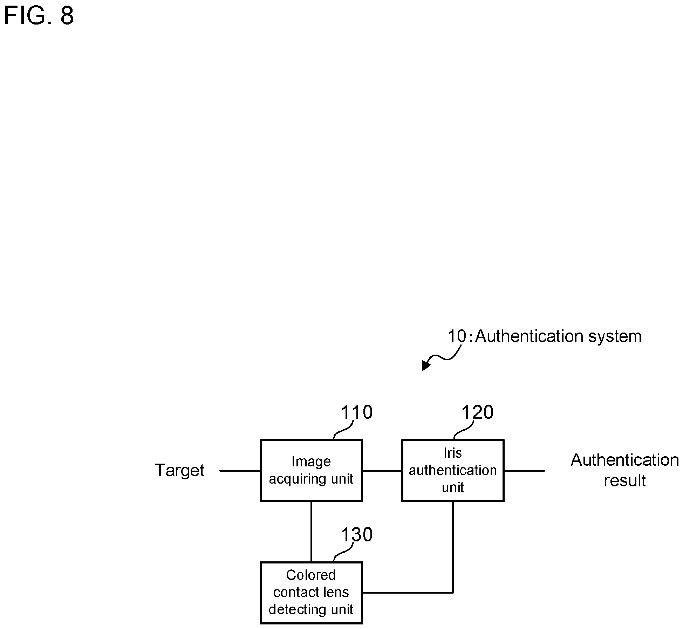

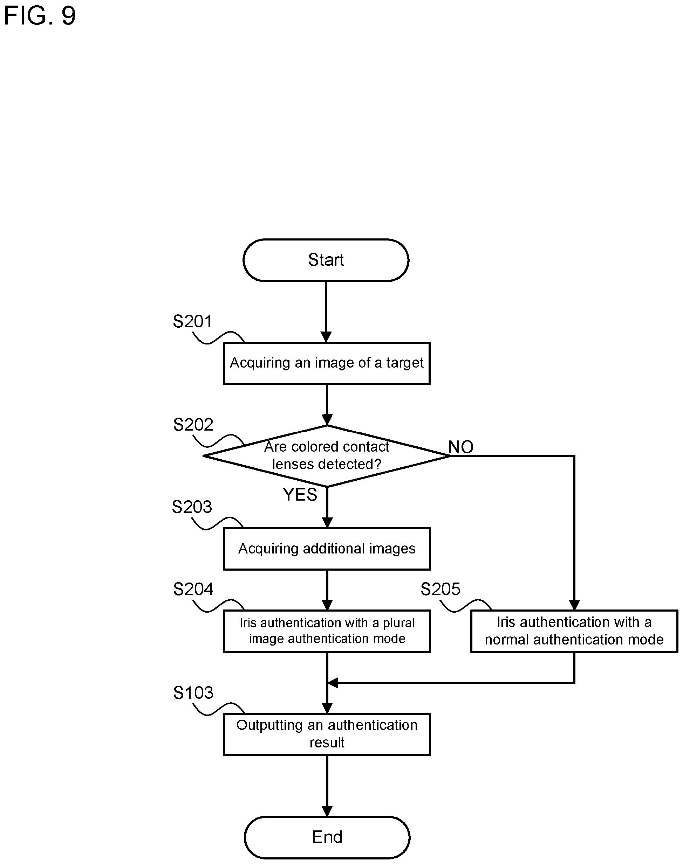

An authentication system 10 of a second embodiment will be described with referring to FIGS. 8 and 9. The second embodiment differs from the first embodiment described above in only a part of configuration and operation. Remaining portions of the second embodiment may be the same as the first embodiment. Therefore, portions, that differ from the first embodiment, of the second embodiment will be described in detail, and descriptions of remaining portions, that are overlapped with the first embodiment, are appropriately omitted.

### (Functional configuration)

First, a functional configuration of the authentication system 10 of the second embodiment will be described with referring to FIG. 8. FIG. 8 is a block diagram showing the functional configuration of the authentication system of the second embodiment. Incidentally, in FIG. 8, the same sign is put to an element, which is similar to a component shown in FIG. 2.

As shown in FIG. 8, the authentication system 10 of the second embodiment comprises, as components for realizing its function, an image acquiring unit 110, an iris authentication unit 120 and a colored contact lens detecting unit 130. In other words, the authentication system 10 of the second embodiment is configured to further comprise the colored contact lens detecting unit 130 in addition to the configuration of the first embodiment (see FIG. 2). The colored contact lens detecting unit 130 may be a processing block realized by the above-mentioned processor 11 (see FIG. 1), for example.

The colored contact lens detecting unit 130 is configured to be able to detect that a target, whose image is acquired by the image acquiring unit 110, wears colored contact lenses 50. The colored contact lens detecting unit 130 detects that a target wears colored contact lenses 50 by using an image of the target acquired by the image acquiring unit 110. Incidentally, an image which is used for detecting that a target wears colored contact lenses 50 may be an image which is used for iris authentication performed by the iris authentication unit 120, or an image which differs from an image used for iris authentication. For example, the colored contact lens detecting unit 130 may be configured to detect by using an image captured for focusing a camera before iris authentication. A detecting method for detecting colored contact lenses performed by the colored contact lens detecting unit 130 is not limited. However, the colored contact lens detecting unit 130 may determine whether or not there are colored contact lenses 50 by using a discriminator generated by deep learning, for example. The colored contact lens detecting unit 130 may acquiring information about colored contact lenses 50 when it is detected that a target wears colored contact lenses 50. The colored contact lens detecting unit 130 may acquiring information about an inner circle (i.e., an inner border of a pattern area) and an outer circle (i.e., a border between a contact lens and a sclera (a white of an eye)) of colored contact lenses 50, for example.

The iris authentication unit 120 of the second embodiment is configured to be able to change modes of iris authentication in accordance with a detecting result by the colored contact lens detecting unit 130 described above. Specifically, the iris authentication unit 120 select a mode in which iris authentication is performed by using a plurality of iris images when it is detected that a target wears colored contact lenses 50. On the other hand, the iris authentication unit 120 selects a mode in which iris authentication is performed by using iris images, a number of which is less than that when it is detected that a target wears colored contact lenses 50, when it is not detected that the target wears colored contact lenses 50. For example, the iris authentication unit 120 is configured to be able to switch a "plural image authentication mode", in which iris authentication is performed by using a plurality of iris images, and a "normal authentication mode", in which iris authentication is performed by using an iris image. In this case, the iris authentication unit 120 performs the plural image authentication mode when it is detected that a target wears colored contact lenses 50. On the other hand, the iris authentication unit 120 performs the normal authentication mode when it is not detected that a target does not wear colored contact lenses 50. Incidentally, the iris authentication unit 120 may be configured to perform iris authentication with the normal authentication mode if it is determined that an iris is seen enough due to the iris visible area being large when a colored contact lens is detected. In the following, a configuration in which the plural image authentication mode and the normal authentication mode are switched will be described.

### (Flow of operation)

Next, flow of operation of the authentication system 10 of the second embodiment will be described with referring to FIG. 9. FIG. 9 is a flowchart showing the flow of the operation of the authentication system of the second embodiment. Incidentally, in FIG. 9, the same sign is put to a processing, which is similar to a processing shown in FIG. 5.

As shown in FIG. 9, when the authentication system 10 of the second embodiment operates, first, the image acquiring unit 110 acquires an image for detecting colored contact lenses 50 from a target (step S201). Then, the colored contact lens detecting unit 130 detects whether or not there are colored contact lenses 50 on the basis of the image of the target acquired by the image acquiring unit 110 (step S202).

When colored contact lenses 50 are detected (step S202: YES), the image acquiring unit 110 further acquires images (step S203), and then the iris authentication unit 120 performs iris authentication with the plural image authentication mode (step S204). As described in the first embodiment, iris authentication is performed by using a plurality of iris images captured from multiple angles. After, the iris authentication unit 120 outputs a result of iris authentication (step S103).

On the other hand, when colored contact lenses 50 are not detected (step S202: NO), the iris authentication unit 120 performs iris authentication with the normal authentication mode (step S205). In other words, capturing iris images from multiple angles is not performed, and iris authentication is performed by using only one iris image. Incidentally, in the normal authentication mode, iris authentication may be performed on the basis of the image used for detecting colored contact lenses 50 (i.e., the image acquired in step S201), or iris authentication may be performed after acquiring an image for iris authentication. After, the iris authentication unit 120 outputs a result of iris authentication (step S103).

### (Technical effects)

Next, technical effects obtained by the authentication system 10 of the second embodiment will be described.

As described with referring to FIGS. 8 and 9, in the authentication system 10 of the second embodiment, iris authentication is performed with different modes in accordance with whether or not there are colored contact lenses 50. Therefore, it is possible to improve authentication accuracy by using a plurality of iris images when a target wears colored contact lenses 50. On the other hand, it is possible to reduce labor and/or processing load since iris authentication is performed by using few images when a target does not wear colored contact lenses 50.

### <Third Embodiment>

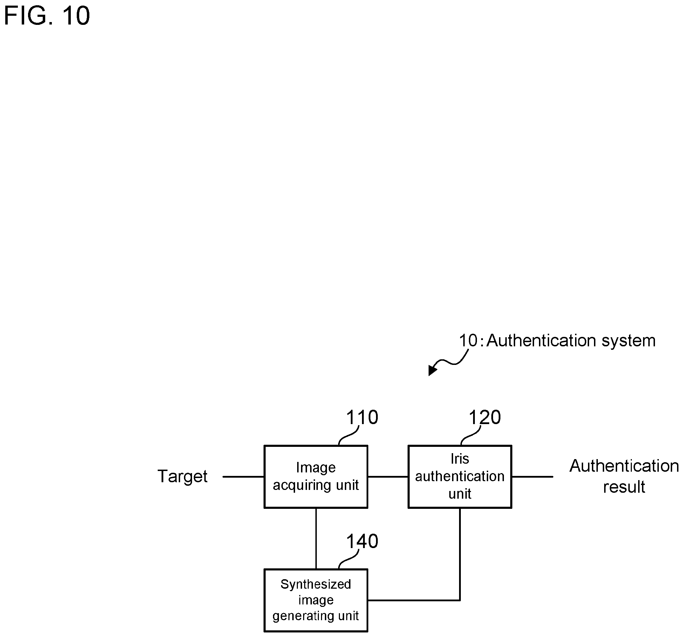

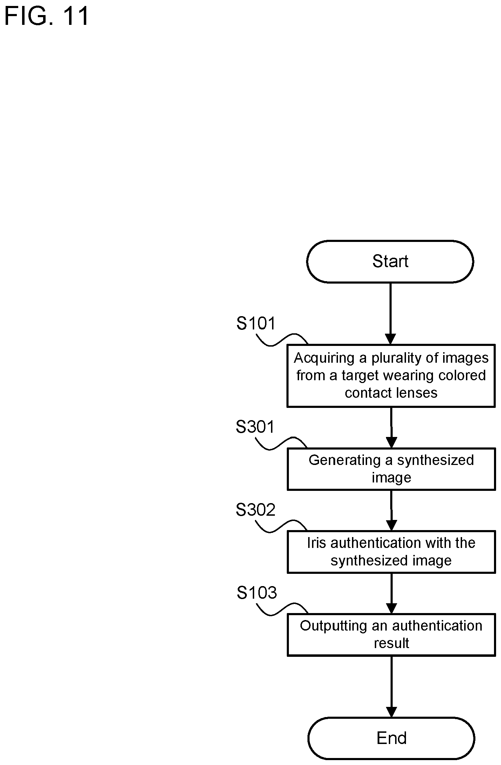

An authentication system 10 of a third embodiment will be described with referring to FIGS. 10 and 11. The third embodiment differs from the first and the second embodiments described above in only a part of configuration and operation. Remaining portions of the third embodiment may be the same as the first and the second embodiments. Therefore, portions, that differ from embodiments already described, of the third embodiment will be described in detail, and descriptions of remaining portions, that are overlapped with embodiments already described, are appropriately omitted.

### (Functional configuration)

First, a functional configuration of the authentication system 10 of the third embodiment will be described with referring to FIG. 10. FIG. 10 is a block diagram showing the functional configuration of the authentication system of the third embodiment. Incidentally, in FIG. 10, the same sign is put to an element, which is similar to a component shown in FIG. 2.

As shown in FIG. 10, the authentication system 10 of the third embodiment comprises, as components for realizing its functions, an image acquiring unit 110, an iris authentication unit 120 and a synthesized image generating unit 140. In other words, the authentication system 10 of the third embodiment further comprises the synthesized image generating unit 140 in addition to the configuration of the first embodiment (see FIG. 2). The synthesized image generating unit 140 may be a processing block realized by the above-mentioned processor 11 (see FIG. 1), for example.

The synthesized image generating unit 140 is configured to be able to generate a synthesized image by synthesizing a plurality of images (i.e., iris images captured at multiple angles) acquired by the image acquiring unit 110. More specifically, the synthesized image generating unit 140 synthesizes iris visible areas of the plurality of images. Therefore, a synthesized image becomes an image having a larger iris visible area in comparison with each of the plurality of images. The synthesized image generating unit 140 may synthesize only iris visible areas after performing a processing, in which a portion other than an iris visible area is masked, to each of the plurality of images. The authentication system 10 is configured that a synthesized image generated by the synthesized image generating unit 140 is outputted to the iris authentication unit 120.

The iris authentication unit 120 performs iris authentication by using the synthesized image generated by the synthesized image generating unit 140. Since the synthesized image is, described above, an image generated by synthesizing a plurality of images, the iris authentication unit 120 performs iris authentication by using substantially the plurality of images.

### (Flow of operation)

Next, flow of operation of the authentication system 10 of the third embodiment will be described with referring to FIG. 11. FIG. 11 is a flowchart showing the flow of the operation of the authentication system of the third embodiment. Incidentally, in FIG. 11, the same sign is put to a processing, which is similar to a processing shown in FIG. 5.

As shown in FIG. 11, when the authentication system 10 of the third embodiment operates, first, the image acquiring unit 110 acquires a plurality of iris images from a target wearing colored contact lenses 50 (step S101). Then, the synthesized image generating unit 140 generates a synthesized image by synthesizing the plurality of iris images acquired by the image acquiring unit 110 (step S301). Incidentally, the synthesized image generating unit 140 may synthesize images one by one at every time an image acquired by the image acquiring unit 110, or may synthesize all images at once after the image acquiring unit 110 acquiring the plurality of images.

Then, the iris authentication unit 120 performs iris authentication by using the synthesized image generated by the synthesized image generating unit 140 (step S302). After, the iris authentication unit 120 outputs a result of iris authentication (step S103). Incidentally, as described in the second embodiment, the iris authentication unit 120 may perform iris authentication by using a single image (i.e., not a synthesized image but an image which is not synthesized) when a target does not wear colored contact lenses 50.

### (Technical effects)

Next, technical effects obtained by the authentication system 10 of the third embodiment will be described.

As described with referring to FIGS. 10 and 11, in the authentication system 10 of the third embodiment, iris authentication is performed by using a synthesized image synthesized a plurality of images. Since the synthesized image includes iris visible areas of the plurality of images, it is possible to obtain more information about an iris 22 in comparison with by using a single iris image. As a result, it is possible to perform iris authentication with high accuracy. Incidentally, there is a method in which features are synthesized as described in a fifth embodiment later. However, it is easy to grasp a feature of an entire image by synthesizing images as described in this embodiment in comparison with synthesizing features. Therefore, a synthesized image generated in the third embodiment has an effect that it is easy to use for an authentication method with deep learning base, for example.

### <Fourth Embodiment>

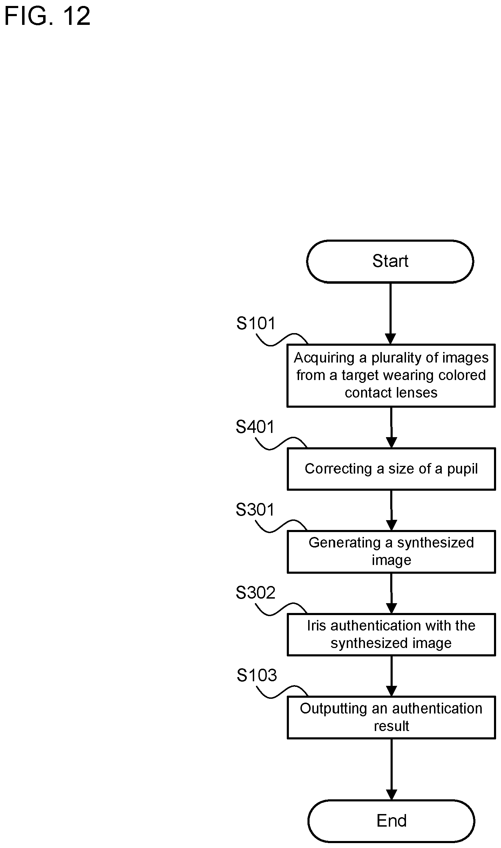

An authentication system 10 of a fourth embodiment will be described with referring to FIG. 12. The fourth embodiment differs from the third embodiment described above in only a part of operation. Remaining portions of the fourth embodiment may be the same as the first to the third embodiments. Therefore, portions, that differ from embodiments already described, of the fourth embodiment will be described in detail, and descriptions of remaining portions, that are overlapped with embodiments already described, are appropriately omitted.

### (Flow of operation)

First, flow of operation of the authentication system 10 of the fourth embodiment will be described with referring to FIG. 12. FIG. 12 is a flowchart showing the flow of the operation of the authentication system 10 of the fourth embodiment. Incidentally, in FIG. 12, the same sign is put to a processing, which is similar to a processing shown in FIG. 11.

As shown in FIG. 12, when the authentication system 10 of the fourth embodiment operates, first, an image acquiring unit 110 acquires a plurality of iris images from a target wearing colored contact lenses (step S101). In the fourth embodiment, in particular, a synthesized image generating unit 140 expands or contracts a pattern of an iris in a radius direction by performing a correction for making size of a pupil 21 in each of the plurality of iris images acquired by the image acquiring unit 110 uniform (step S401). The synthesized image generating unit 140 performs the correction by selecting a single image as a standard image, and then by making size of the pupil 21 in each of other images be the same as size of the pupil 21 in the standard image, for example. The synthesized image generating unit 140 may correct size of the pupil 21 in each of the plurality of images so that the size becomes a predetermined standard size. If size of a colored contact lens, which is not changed due to brightness of a surrounding environment, differ between iris images, the size of the colored contact lens is corrected to become uniform. More specifically, the synthesized image generating unit 140 may expand or contract an iris pattern in a radius direction by performing a correction for making an inner circle of the colored contact lens become uniform, a correction for making a diameter of the inner circle of the colored contact lens become uniform, a correction for an outer circle of the colored contact lens become uniform, a correction for a diameter of the outer circle of the colored contact lens become uniform, a correction for area of the colored contact lens become uniform, or the like.

Then, the synthesized image generating unit 140 synthesizes the plurality of iris images acquired by the image acquiring unit 110, and generates a synthesized image (step S301). The iris authentication unit 120 performs iris authentication by using the synthesized image generated by the synthesized image generating unit 140 (step S302). After, the iris authentication unit 120 outputs a result of iris authentication (step S103).

### (Technical effects)

Next, technical effect obtained by the authentication system 10 of the fourth embodiment will be described.

As described with referring to FIG. 12, in the authentication system 10 of the fourth embodiment, the correction for making the size of the pupil 21 in each of the plurality of images uniform is performed when the synthesized image is generated. Therefore, since the plurality of images are corrected so that size difference between images is small, it is possible to more properly generate the synthesized image.

### <Fifth Embodiment>

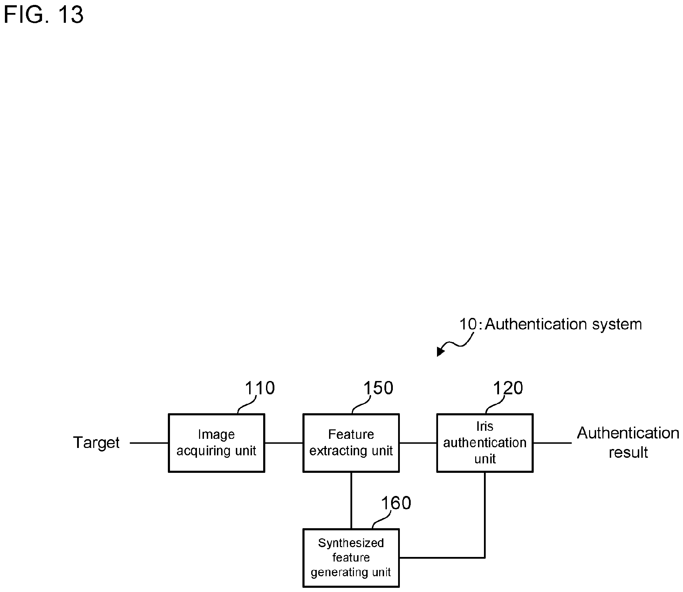

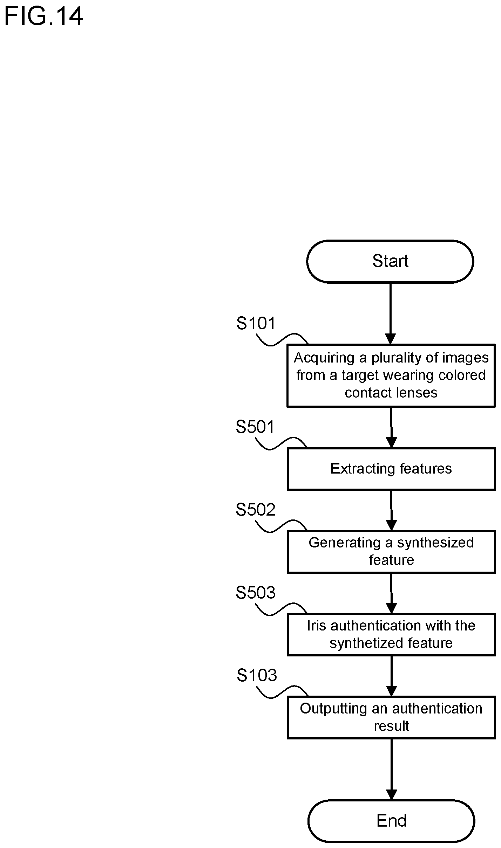

An authentication system 10 of a fifth embodiment will be described with referring to FIGS. 13 and 14. The fifth embodiment differs from the first to the fourth embodiments described above in only a part of configuration and operation. Remaining portions of the fifth embodiment may be the same as the first to the fourth embodiments. Therefore, portions, that differ from embodiments already described, of the fifth embodiment will be described in detail, and descriptions of remaining portions, that are overlapped with embodiments already described, are appropriately omitted.

### (Functional configuration)

First, a functional configuration of the authentication system 10 of the fifth embodiment will be described with referring to FIG. 13. FIG. 13 is a block diagram showing the functional configuration of the authentication system of the fifth embodiment. Incidentally, in FIG. 13, the same sign is put to an element, which is similar to a component shown in FIG. 2.

As shown in FIG. 13, the authentication system 10 of the fifth embodiment comprises, as components for realizing its functions, an image acquiring unit 110, an iris authentication unit 120, a feature extracting unit 150 and a synthesized feature generating unit 160. In other words, the authentication system 10 of the fifth embodiment further comprises the feature extracting unit 150 and the synthesized feature generating unit 160 in addition to the configuration of the first embodiment (see FIG. 2). Each of the feature extracting unit 150 and the synthesized feature generating unit 160 may be a processing block realized by the above-mentioned processor 11 (see FIG. 1), for example.

The feature extracting unit 150 is configured to be able to extract a feature (i.e., a value indicating a feature of an image) from the image acquired by the image acquiring unit 110. Since existing techniques can be applied to a specific extracting method of the feature, detailed explanation of the method is omitted. The feature extracting unit 150 may perform a processing for masking a portion other than an iris visible area in each of the plurality of images, and then may extract features from portions corresponding to iris visible areas. The authentication system 10 is configured to output features extracted by the feature extracting unit 150 to each of the iris authentication unit 120 and the synthesized feature generating unit 160.

The synthesized feature generating unit 160 is configured to be able to generate a synthesized feature by synthesizing a plurality of features (i.e., features extracted from a plurality of images, respectively) extracted by the feature extracting unit 150. More specifically, the synthesized feature generating unit 160 synthesizes features corresponding to iris visible areas of the plurality of images. Therefore, the synthesized feature becomes a feature including more information about the iris visible area in comparison with a single feature extracted from each of the plurality of images. The authentication system 10 is configured to output the synthesized feature generated by the synthesized feature generating unit 160 to the iris authentication unit 120.

The iris authentication unit 120 of the fifth embodiment performs iris authentication by using the synthesized feature generated by the synthesized feature generating unit 160. Since the synthesized feature is, as described above, a synthesized amount of features extracted from the plurality of images respectively, the iris authentication unit 120 performs iris authentication by using substantially features of the plurality of images.

### (Flow of operation)

Next, flow of operation of the authentication system 10 of the fifth embodiment will be described with referring to FIG. 14. FIG. 14 is a flowchart showing the flow of the operation of the authentication system of the fifth embodiment. Incidentally, in FIG. 14, the same sign is put to a processing, which is similar to a processing shown in FIG. 5.

As shown in FIG. 14, when the authentication system 10 of the fifth embodiment operates, first, the image acquiring unit 110 acquires a plurality of iris images from a target wearing colored contact lenses (step S101). Then, the feature extracting unit 150 extracts a plurality of features from each of the plurality of iris images acquired by the image acquiring unit 110 (step S501).

Next, the synthesized feature generating unit 160 synthesizes the plurality of features extracted by the feature extracting unit 150, and generates a synthesized feature (step S502). Incidentally, the synthesized feature generating unit 160 may synthesize features one by one at every time a feature extracted by the feature extracting unit 150, or may synthesize all features at once after the feature extracting unit 150 extracting the plurality of features.

Next, the iris authentication unit 120 performs iris authentication by using the synthesized feature generated by the synthesized feature generating unit 160 (step S503). After, the iris authentication unit 120 outputs a result of iris authentication (step S103). Incidentally, as described in the second embodiment, the iris authentication unit 120 may perform iris authentication by using a single feature (i.e., not a synthesized feature but a feature before being synthesized) when a target does not wear colored contact lenses 50.

### (Technical effects)

Next, technical effects obtained by the authentication system 10 of the fifth embodiment will be described.

As described with referring to FIGS. 13 and 14, in the authentication system 10 of the fifth embodiment, a plurality of features are extracted from each of a plurality of images, and iris authentication is performed by using a synthesized feature of the plurality of features. Since the synthesized feature includes features of iris visible areas of the plurality of images, it is possible to obtain more information about an iris 22 than a single feature. As a result, it is possible to perform iris authentication with high accuracy.
Incidentally, there is a method for synthesizing images such as the third embodiment described above. However, it is easy to adjust positions in synthesizing when features are synthesized such as this embodiment, in comparison with when images are synthesized.

### <Sixth Embodiment>

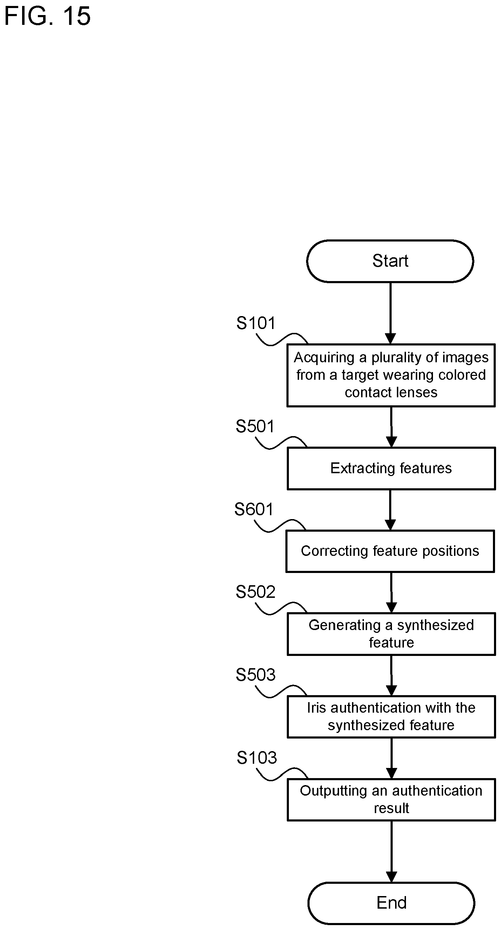

An authentication system 10 of a sixth embodiment will be described with referring to FIG. 15. The sixth embodiment differs from the fifth embodiment described above in only a part of operation. Remaining portions of the sixth embodiment may be the same as the first to the fifth embodiments. Therefore, portions, that differ from embodiments already described, of the sixth embodiment will be described in detail, and descriptions of remaining portions, that are overlapped with embodiments already described, are appropriately omitted.

### (Flow of operation)

First, flow of operation of the authentication system 10 of the sixth embodiment will be described with referring to FIG. 15. FIG. 15 is a flowchart showing the flow of the operation of the authentication system of the sixth embodiment. Incidentally, in FIG. 15, the same sign is put to a processing, which is similar to a processing shown in FIG. 14.

As shown in FIG. 15, when the authentication system 10 of the sixth embodiment operates, first, an image acquiring unit 110 acquires a plurality of iris images from a target wearing colored contact lenses (step S101). Then, a feature extracting unit 150 extracts features from each of the plurality of iris images acquired by the image acquiring unit 110 (step S501).

In the sixth embodiment, in particular, a synthesized feature generating unit 160 performs a position correction for the plurality of features extracted by the feature extracting unit 150 (step S601). Specifically, the synthesized feature generating unit 160 performs the position correction so that matching degree of features corresponding to common areas among the plurality of features is high. The position correction may include a displacing processing such as rotation, translation or the like.

Then, the synthesized feature generating unit 160 synthesizes features performed the position correction, and generates a synthesized feature (step S502). An iris authentication unit 120 performs iris authentication by using the synthesized feature generated by the synthesized feature generating unit 160 (step S503). After, the iris authentication unit 120 outputs a result of iris authentication (step S103).

### (Technical effects)

Next, technical effects obtained by the authentication system 10 of the sixth embodiment will be described.

As shown with referring to FIG. 15, in the authentication system 10 of the sixth embodiment, the position correction for features is performed in generating a synthesized feature. Therefore, since it is possible to appropriately perform adjusting positions of features, it is possible to more appropriately generate a synthesized feature.

### <Seventh Embodiment>

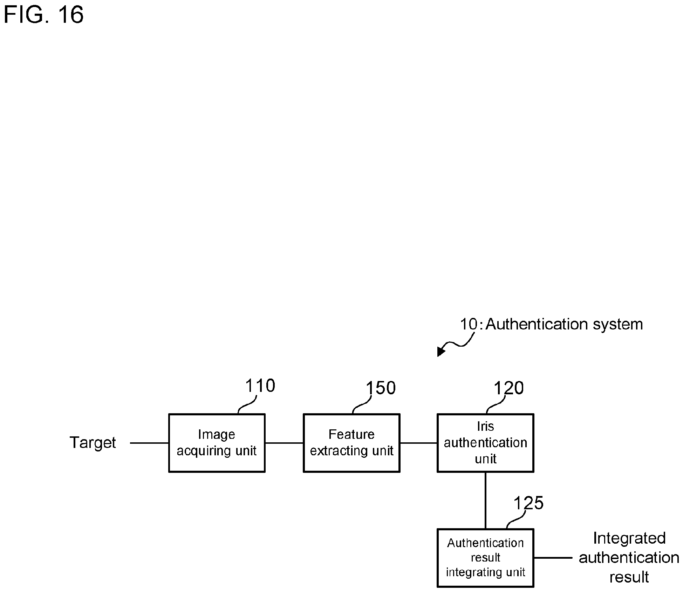

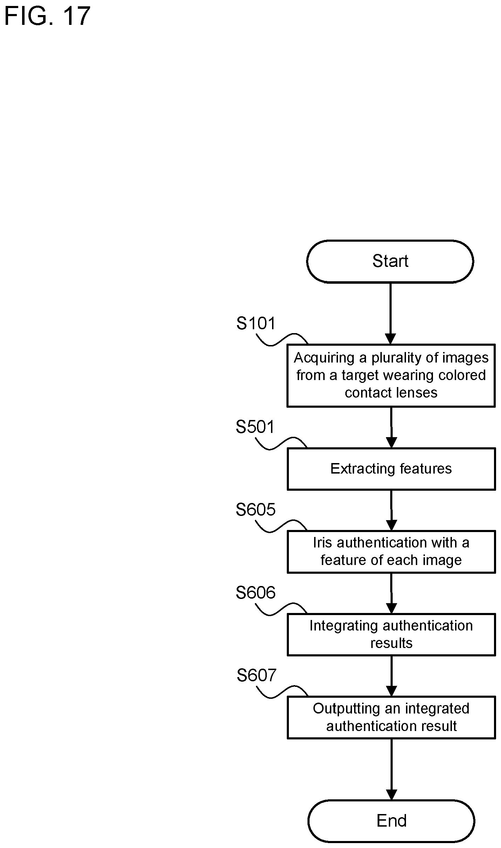

An authentication system 10 of a seventh embodiment will be described with referring to FIGS. 16 and 17. The seventh embodiment differs from the first to the sixth embodiments described above in only a part of configuration and operation. Remaining portions of the seventh embodiment may be the same as the first to the sixth embodiments. Therefore, portions, that differ from embodiments already described, of the seventh embodiment will be described in detail, and descriptions of remaining portions, that are overlapped with embodiments already described, are appropriately omitted.

### (Functional configuration)

First, a functional configuration of the authentication system 10 of the seventh embodiment will be described with referring to FIG. 16. FIG. 16 is a block diagram showing the functional configuration of the authentication system of the seventh embodiment. Incidentally, in FIG. 16, the same sign is put to an element, which is similar to a component shown in FIG. 13.

As shown in FIG. 16, the authentication system 10 of the seventh embodiment comprises, as components for realizing its functions, an image acquiring unit 110, an iris authentication unit 120, a feature extracting unit 150 and an authentication result integrating unit 125. In other words, the authentication system 120 is configured to comprise the authentication result integrating unit 125 instead of the synthesized feature generating unit 160 of the fifth embodiment (see FIG. 13). The authentication result integrating unit 125 may be a processing block realized by the above-mentioned processor 11 (see FIG. 11), for example.

The iris authentication unit 120 of the seventh embodiment is configured to perform iris authentication by using each of features extracted from a plurality of images by the feature extracting unit 150. In other words, the iris authentication unit 120 of the seventh embodiment is configured to perform iris authentication by using a plurality of features. The authentication system 10 is configured that an authentication result of the iris authentication unit 120 is outputs to the authentication result integrating unit 125. The iris authentication unit 120 may specify an area from which a feature is extracted (hereinafter, called "feature area information"), and may perform a matching processing by also using the feature area information in iris authentication. The iris authentication unit 120 may be configured to output the feature area information with an authentication result.

The authentication result integrating unit 125 is configured to be able to output a result, which is generated by integrating a plurality of authentication results of the iris authentication unit 120, as a single authentication result integrated (integrated authentication result). It is possible to apply existing techniques to a specific integrating method for authentication results. The authentication result integrating unit 125 performs the integration by using feature area information when the feature area information can be used. In this case, the authentication result integrating unit 125 performs the integration by considering degree of overlap between areas according to each authentication result based on an area of an iris, for example.

### (Flow of operation)

Next, flow of operation of the authentication system 10 of the seventh embodiment will be described with referring to FIG. 17. FIG. 17 is a flowchart showing the flow of the operation of the authentication system of the seventh embodiment. Incidentally, in FIG. 17, the same sign is put to a processing, which is similar to a processing shown in FIG. 14.

As shown in FIG. 17, when the authentication system 10 of the seventh embodiment operates, first, the image acquiring unit 110 acquires a plurality of iris images from a target wearing colored contact lenses (step S101). Then, the feature extracting unit 150 extracts features from each of the plurality of iris images acquired by the image acquiring unit 110 (step S501).

Then, the iris authentication unit 120 performs iris authentication multiple times by using features extracted from each of the plurality of iris images (step S605). After, the authentication result integrating unit 125 integrates a plurality of authentication results of the iris authentication unit 120 (step S606). Then, the authentication result integrating unit 125 outputs an integrated authentication result (step S607).

### (Technical effects)

Next, technical effects obtained by the authentication system 10 of the seventh embodiment will be described.

As described with referring to FIGS. 16 and 17, in the authentication system 10 of the seventh embodiment, features are extracted from each of the plurality of images, and a result, which is generated by integrating a plurality of authentication results based on the features, is outputted. Therefore, since it is possible to obtain an authentication result by integrating the plurality of authentication results (i.e., authentication results by using the plurality of images), it is possible to improve accuracy of iris authentication.

### <Eighth Embodiment>

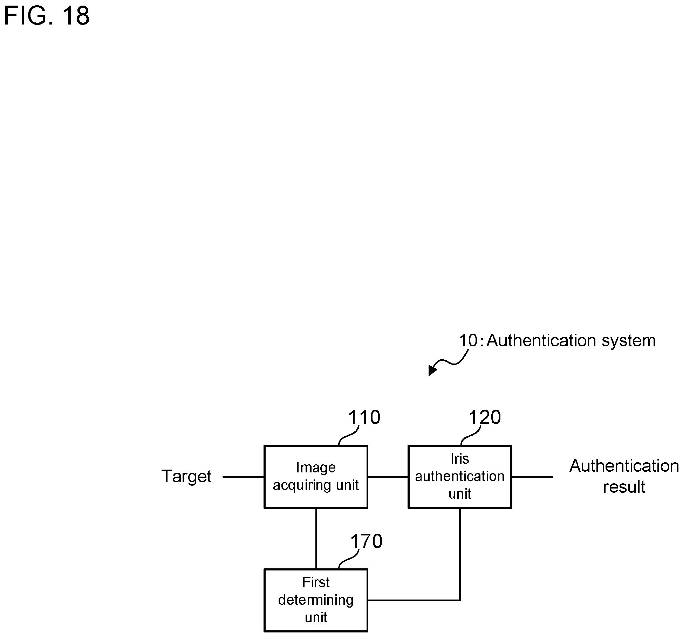

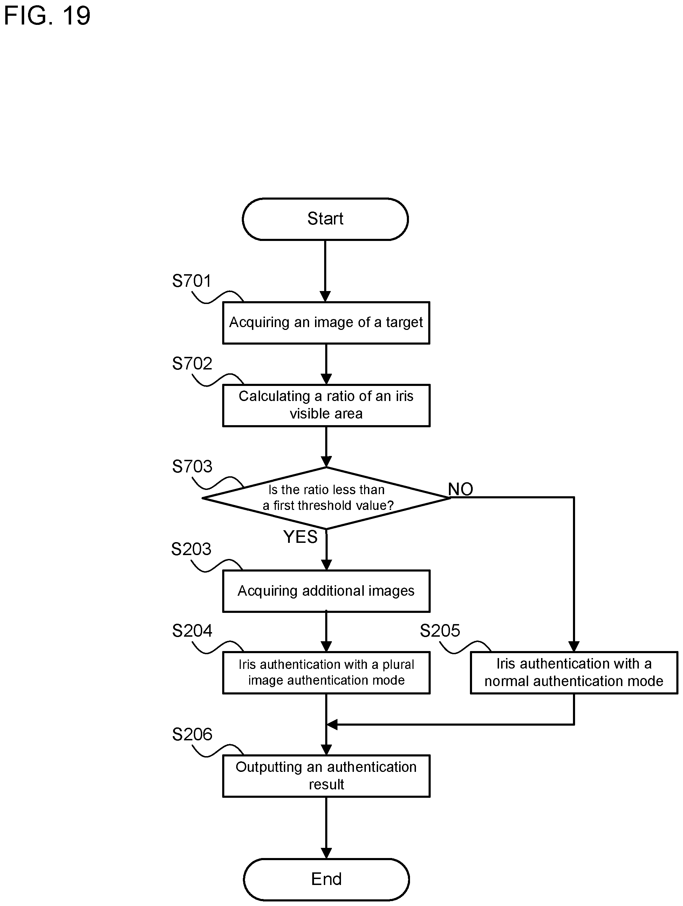

An authentication system 10 of an eighth embodiment will be described with referring to FIGS. 18 and 19. The eighth embodiment differs from the first to the seventh embodiments described above in only a part of configuration and operation. Remaining portions of the eighth embodiment may be the same as the first to the seventh embodiments. Therefore, portions, that differ from embodiments already described, of the eighth embodiment will be described in detail, and descriptions of remaining portions, that are overlapped with embodiments already described, are appropriately omitted.

### (Functional configuration)

First, a functional configuration of the authentication system 10 of the eighth embodiment will be described with referring to FIG. 18. FIG. 18 is a block diagram showing the functional configuration of the authentication system of the eighth embodiment. Incidentally, in FIG. 18, the same sign is put to an element, which is similar to a component shown in FIG. 2.

As shown in FIG. 18, the authentication system 10 of the eighth embodiment comprises, as components for realizing its functions, an image acquiring unit 110, an iris authentication unit 120 and a first determining unit 170. In other words, the authentication system 10 of the eighth embodiment is configured to further comprise the first determining unit 170 in addition to the configuration of the first embodiment (see FIG. 2). The first determining unit 170 may be a processing block realized by the above-mentioned processor 11 (see FIG. 1), for example.

The first determining unit 170 is configured to calculate a ratio of an iris visible area to entire of an iris 22. For example, the first determining unit 170 may calculate an area of the iris 22 and an area of the iris visible area from an image of a target, and then may calculate the ratio from the area values. Incidentally, the area of the iris 22 may be calculated by assuming that an outer circle of a colored contact lens 50 is an outer circle of an iris. When the outer circle of the iris is larger than the outer circle of the colored contact lens 50 (i.e., the iris 22 sticks out of the colored contact lens 50), the first determining unit 170 may calculate the area of the iris 22 on the basis of not the colored contact lens 50 but the outer circle of the iris 22.

The first determining unit 170 is further configured to be able to determine a mode of iris authentication on the basis of the calculated ratio. Specifically, the first determining unit 170 may select a mode in which iris authentication is performed by using a plurality of iris images, if the calculated ratio is less than a first threshold value, and select a mode in which iris authentication is performed by using fewer iris images, if the calculated ratio is greater than or equal to the first threshold value. Here, the "first threshold value" is a threshold value for determining whether or not a situation is a situation in which iris authentication is not performed appropriately if a plurality of iris images are not used (e.g., a situation in which an iris visible area of a single image is not enough for iris authentication). Hereinafter, the configuration in which the plural image authentication mode and the normal authentication mode are switched described in the second embodiment will be described as an example.

### (Flow of operation)

Next, flow of operation of the authentication system 10 of the eighth embodiment will be described with referring to FIG. 19. FIG. 19 is a flowchart showing the flow of the operation of the authentication system of the eighth embodiment. Incidentally, in FIG. 19, the same sign is put to a processing, which is similar to a processing shown in FIG. 9.

As shown in FIG. 19, when the authentication system 10 of the eighth embodiment operates, first, the image acquiring unit 110 acquires an image, which is used for calculating a ratio by the first determining unit 170 (step S701). Then, the first determining unit 170 calculates the ratio of an iris visible area to entire of an iris 22 on the basis of the image of a target acquired by the image acquiring unit 110 (step S702).

Then, the first determining unit 170 determines whether or not the calculated ratio is less than the first threshold value (step S703). When the calculated ratio is less than the first threshold value (step S703: YES), the image acquiring unit 110 further acquires an image or images (step S203), and then, the iris authentication unit 120 performs iris authentication with the plural image authentication mode (step S204). In other words, iris authentication is performed by using a plurality of iris images captured from multiple angles, as described in the first embodiment. After, the iris authentication unit 120 outputs a result of iris authentication (step S206).

On the other hand, when the calculated ratio is not less than the first threshold value (step S703: NO), the iris authentication unit 120 performs iris authentication with the normal authentication mode (step S205). In other words, iris authentication is performed by using a single image, not capturing iris images from multiple angles. After, the iris authentication unit 120 outputs a result of iris authentication (step S206).

### (Technical effects)

Next, technical effects obtained by the authentication system 10 of the eighth embodiment will be described.

As described with referring to FIGS. 18 and 19, in the authentication system 10 of the eighth embodiment, iris authentication is performed with different authentication modes according to a ratio of an iris visible area to entire of an iris 22. Therefore, when the iris visible area is small, it is possible to improve accuracy of authentication by using a plurality of iris images. On the other hand, when the iris visible area is large, it is possible to reduce labor and/or processing load since iris authentication is performed by using few images.

### <Ninth Embodiment>

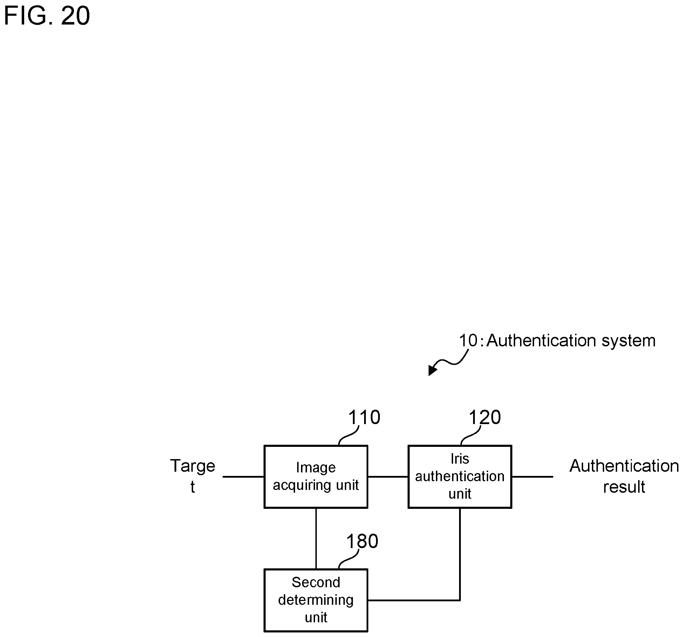

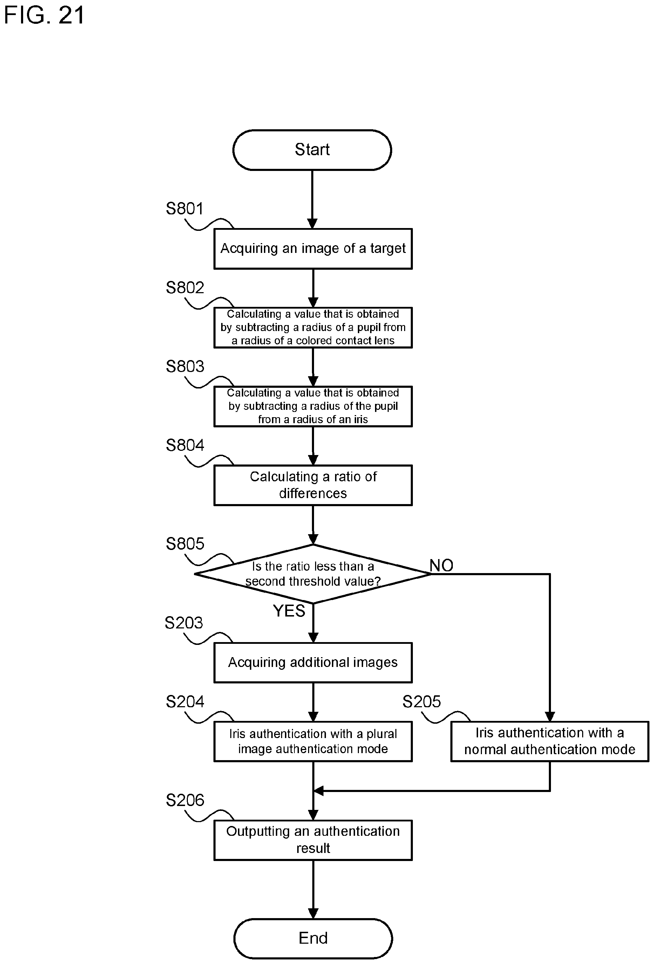

An authentication system 10 of a ninth embodiment will be described with referring to FIGS. 20 and 21. The ninth embodiment differs from the first to the eighth embodiments described above in only a part of configuration and operation. Remaining portions of the ninth embodiment may be the same as the first to the eighth embodiments. Therefore, portions, that differ from embodiments already described, of the ninth embodiment will be described in detail, and descriptions of remaining portions, that are overlapped with embodiments already described, are appropriately omitted.

### (Functional configuration)

First, a functional configuration of the authentication system 10 of the ninth embodiment will be described with referring to FIG. 20. FIG. 20 is a block diagram showing the functional configuration of the authentication system of the ninth embodiment. Incidentally, in FIG. 20, the same sign is put to an element, which is similar to a component shown in FIG. 2.

As shown in FIG. 20, the authentication system 10 of the ninth embodiment comprises, as components for realizing its functions, an image acquiring unit 110, an iris authentication unit 120 and a second determining unit 180. In other words, the authentication system 10 of the ninth embodiment is configured to further comprise the second determining unit 180 in addition to the configuration of the first embodiment (see FIG. 2). The second determining unit 180 may be a processing block realized by the above-mentioned processor 11 (see FIG. 1), for example.

The second determining unit 180 is configured to be able to calculate a ratio between a value that is obtained by subtracting a radius of a pupil 21 of a target from a radius of an inner circle (i.e., a circle indicating an inner border of a pattern area) of a colored contact lens 50, and a value that is obtained by subtracting the radius of the pupil 21 of the target from a radius of an iris 22 of the target. For example, the second determining unit 180 may calculate the radius of the inner circle of the colored contact lens 50, the radius of the pupil 21 of the target and the radius of the iris 22 of the target from an image of the target, and then, may calculate the ratio from those values. In other words, the second determining unit 180 calculates how much the difference between the radius of the inner circle and the radius of the pupil is to the difference between the radius of the iris and the radius of the pupil. The ratio calculated in this manner becomes a value indicating a size of an iris visible area, likewise the calculated ratio in the eighth embodiment. Incidentally, the second determining unit 180 may calculate a radius of a circle of the iris by assuming that an outer circle of the colored contact lens is the circle of the iris, instead of the radius of the iris when a border between the iris and a sclera (a white of an eye) is covered by the colored contact lens.

The second determining unit 180 is further configured to be able to determine a mode of iris authentication on the basis of the calculated ratio. Specifically, the second determining unit 180 may select a mode, in which iris authentication is performed by using a plurality of iris images, if the calculated ratio is less than a second threshold value, and select a mode, in which iris authentication is performed by using fewer iris images, if the calculated ratio is greater than or equal to the second threshold value. Here, the "second threshold value" is a threshold value for determining whether or not a situation is a situation in which iris authentication is not performed appropriately if a plurality of iris images are not used (e.g., a situation in which an iris visible area of a single image is not enough for iris authentication). Hereinafter, the configuration, in which the plural image authentication mode and the normal authentication mode are switched, described in the second embodiment will be described as an example.

### (Flow of operation)

Next, flow of operation of the authentication system 10 of the ninth embodiment will be described with referring to FIG. 21. FIG. 21 is a flowchart showing the flow of the operation of the authentication system of the ninth embodiment. Incidentally, in FIG. 21, the same sign is put to a processing, which is similar to a processing shown in FIG. 9.

As shown in FIG. 21, when the authentication system 10 of the ninth embodiment operates, first, the image acquiring unit 110 acquires an image, which is used for calculating a ratio by the second determining unit 180 (step S801). Then, the second determining unit 180 calculates the value that is obtained by subtracting the radius of the pupil 21 of the target from the radius of the inner circle of the colored contact lens 50(step S802). The second determining unit 180 calculates the value that is obtained by subtracting the radius of the pupil 21 of the target from the radius of the iris 22 of the target (step S803). Then, the second determining unit 180 calculates the ratio between the difference calculated in the step S802 and the difference calculated in the step S803 (step S804).

Then, the second determining unit 180 determines whether or not the calculated ratio is less than the second threshold value (step S805). When the calculated ratio is less than the second threshold value (step S805: YES), the image acquiring unit 110 further acquires an image or images (step S203), and then, the iris authentication unit 120 performs iris authentication with the plural image authentication mode (step S204). In other words, iris authentication is performed by using a plurality of iris images captured from multiple angles, as described in the first embodiment. After, the iris authentication unit 120 outputs a result of iris authentication (step S206).

On the other hand, when the calculated ratio is not less than the second threshold value (step S805: NO), the iris authentication unit 120 performs iris authentication with the normal authentication mode (step S205). In other words, iris authentication is performed by a single image, not capturing iris images from multiple angles. After, the iris authentication unit 120 outputs a result of iris authentication (step S103).

### (Technical effects)

Next, technical effects obtained by the authentication system 10 of the ninth embodiment will be described.

As described with referring to FIGS. 20 and 21, in the authentication system 10 of the ninth embodiment, iris authentication is performed with different authentication modes according to the ratio between the value that is obtained by subtracting the radius of the pupil 21 of the target from the radius of the inner circle of the colored contact lens 50, and the value that is obtained by subtracting the radius of the pupil 21 of the target from the radius of the iris 22 of the target. Therefore, when the iris visible area is small, it is possible to improve accuracy of authentication by using a plurality of iris images, likewise the eighth embodiment. On the other hand, when the iris visible area is large, it is possible to reduce labor and/or processing load since iris authentication is performed by using few images.

### <Tenth Embodiment>

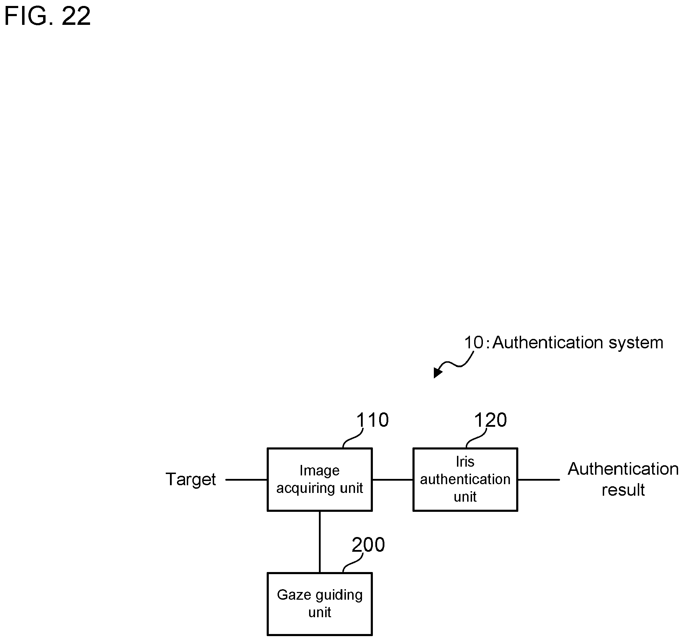

An authentication system 10 of a tenth embodiment will be described with referring to FIGS. 22 to 25B. The tenth embodiment differs from the first to the ninth embodiments described above in only a part of configuration and operation. Remaining portions of the tenth embodiment may be the same as the first to the ninth embodiments. Therefore, portions, that differ from embodiments already described, of the tenth embodiment will be described in detail, and descriptions of remaining portions, that are overlapped with embodiments already described, are appropriately omitted.

### (Functional configuration)

First, a functional configuration of the authentication system 10 of the tenth embodiment will be described with referring to FIG. 22. FIG. 22 is a block diagram showing the functional configuration of the authentication system of the tenth embodiment. Incidentally, in FIG. 22, the same sign is put to an element, which is similar to a component shown in FIG. 2.

As shown in FIG. 22, the authentication system 10 of the tenth embodiment comprises, as components for realizing its functions, an image acquiring unit 110, an iris authentication unit 120 and a gaze guiding unit 200. In other words, the authentication system 10 of the tenth embodiment is configured to further comprise the gaze guiding unit 200 in addition to the configuration of the first embodiment (see FIG. 2). The gaze guiding unit 200 may be a processing block realized by the above-mentioned processor 11 (see FIG. 1), for example. The gaze guiding unit 200 may be configured to be able to output guiding information by the above-mentioned output device 16 (see FIG. 1).

The gaze guiding unit 200 is configured to be able to guide a gaze of a target in order to capture an eye of the target from multiple angles. Specifically, the gaze guiding unit 200 guides the gaze of the target by outputting guiding information to the target. The guiding information may be presented as an image or a message on a display, for example. Alternatively, the guiding information may be outputted as voice information or audio information by using a speaker or the like. A specific example of the guiding information will be described later.

### (Flow of operation)

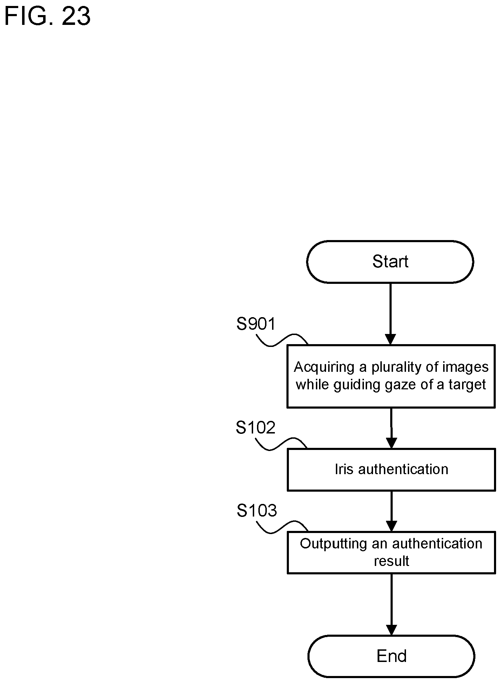

Next, flow of operation of the authentication system 10 of the tenth embodiment will be described with referring to FIG. 23. FIG. 23 is a flowchart showing the flow of the operation of the authentication system of the tenth embodiment. Incidentally, in FIG. 23, the same sign is put to a processing, which is similar to a processing shown in FIG. 5.

As shown in FIG. 23, when the authentication system 10 of the tenth embodiment operates, the image acquiring unit 110 acquires a plurality of iris images from a target while the gaze guiding unit 200 guides a gaze of the target by outputting guiding information (step S901). For example, an image in which the target turns to right is captured in a situation where guiding information for guiding the gaze to a right direction is outputted. Then, an image, in which the target turns to left, is captured in a situation where guiding information for guiding the gaze to a left direction is outputted.

Next, the iris authentication unit 120 performs iris authentication by using the plurality of iris images acquired by the image acquiring unit 110 (i.e., iris images acquired at multiple angles by guiding the gaze) (step S102). After, the iris authentication unit 120 outputs a result of iris authentication (step S103).

### (Examples of guiding information)

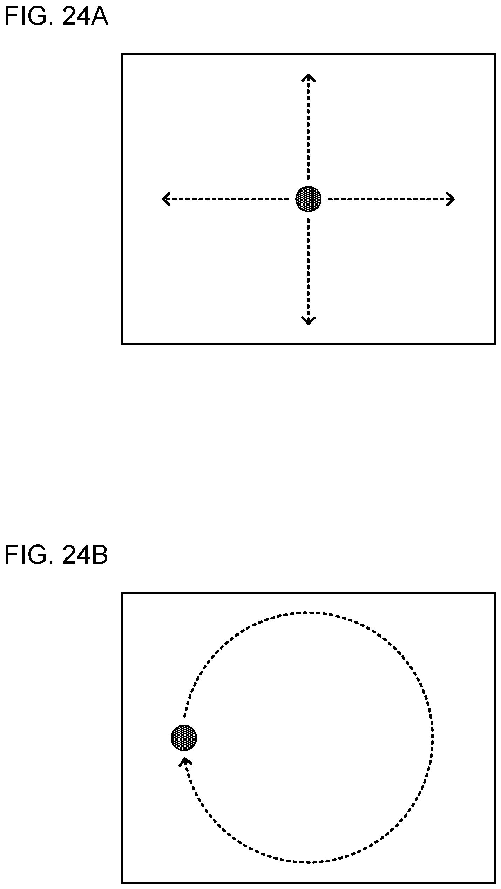

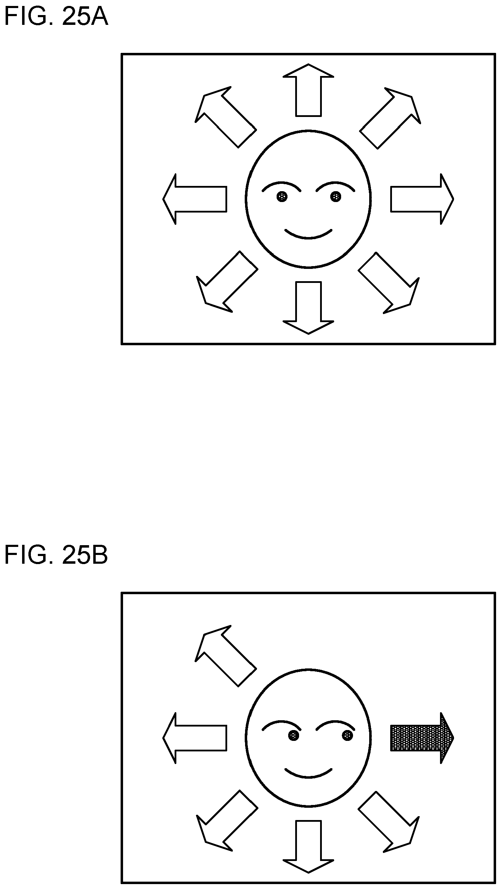

Next, examples of guiding information outputted by the authentication system 10 (specifically, the gaze guiding unit 200) of the tenth embodiment will be described with referring to FIGS. 24A, 24B, 25A and 25B. FIGS. 24A and 24B are a plane view (part 1) showing an example of a guiding indication for guiding a gaze direction. FIGS. 25A and 25B are a plane view (part 2) showing an example of the guiding indication for guiding the gaze direction.

As shown in FIGS. 24A and 24B, the guiding information may be information for displaying a point to make a target gaze at on a display, and for moving the point to a direction in which gaze is guided. For example, in an example shown in FIG. 24A, a point moves from a center of a display to top, bottom, left and right in sequence. Therefore, it is possible to acquire images, in which an eye of a target directs to top, bottom, left and right, respectively. In an example shown in FIG. 24B, a point moves so that the point draws a circle on a display. Therefore, it is possible to acquire images, in which an eye of a target turns in various directions. Incidentally, for example, a message that "Please follow the point moving on the display with your eyes" or the like may be displayed in addition to the above-mentioned point. In order to prevent moving a head of a target due to moving eyes of the target, a message that "Please follow the point moving on the display with your eyes, but not moving your face" or the like may be displayed. These messages may be outputted by voice.

As shown in FIGS. 25A and 25B, guiding information may be information for displaying arrows showing directions in which a gaze is guided, around a face of a target displayed on a display. For example, as shown in FIG. 25A, arrows are displayed around a face of a target in eight directions: upper, upper-right, right, lower-right, lower, lower-left, left and upper-left. Therefore, it is possible to acquire images, in which eyes of the target turn to upper, upper-right, right, lower-right, lower, lower-left, left and upper-left. Incidentally, as shown in FIG. 25B, an arrow corresponding to a direction in which a target currently turns may be highlighted. In this example, since the target turns to the right toward the screen, the arrow showing the right direction is highlighted (e.g., the arrow displayed with a color, which is different from other arrows). An arrow corresponding to a direction in which gaze guiding has ended may be made to disappear. In this example, because the guide in upper and upper-right direction has ended, arrows corresponding to upper and upper-right directions disappear. Incidentally, in addition to the display above, a message that "Please turn your gaze to the right" or the like may be displayed, for example. This message may be outputted by voice.

Incidentally, guiding information may be information indicating specific moving amount of a gaze. For example, messages that "Please move your gaze by 30 degrees", "Please move your gaze by 5 cm" or the like may be outputted. A moving amount of a gaze may be estimated by a gaze estimating technique, and then, a message that "Please move your gaze more" when the moving amount is not enough, and a message that "Please reduce movement of your gaze" when the moving amount is too large, may be displayed. These messages may be outputted by voice instead of displaying.

The above-mentioned guiding examples are just examples. Guiding may be performed by other configurations. For example, a plurality of LED lights are placed around a display, and then a LED light corresponding to a direction in which a gaze is guided may be turned on or blinked. A message that "Please move your gaze to the right" may be displayed without displaying an image. A message that "Please move your gaze to the right" may be outputted by voice.

### (Technical effects)

Next, technical effects obtained by the authentication system 10 of the tenth embodiment will be described.

As described with referring to FIGS. 22 to 25B, in the authentication system 10 of the tenth embodiment, guiding information for guiding a gaze of a target is outputted. Therefore, since it is possible to change a gaze direction of the target to a desired guiding direction, capturing an eye of the target at multiple angles becomes easy. Incidentally, the configuration for guiding the gaze direction of the target is described in this embodiment. However, it is possible to obtain likewise effects by a configuration for guiding a face direction of the target.

### <Eleventh Embodiment>

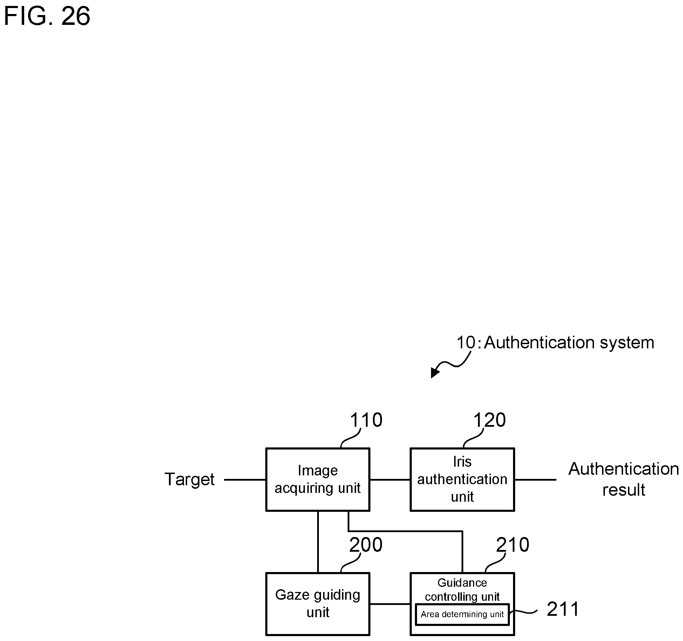

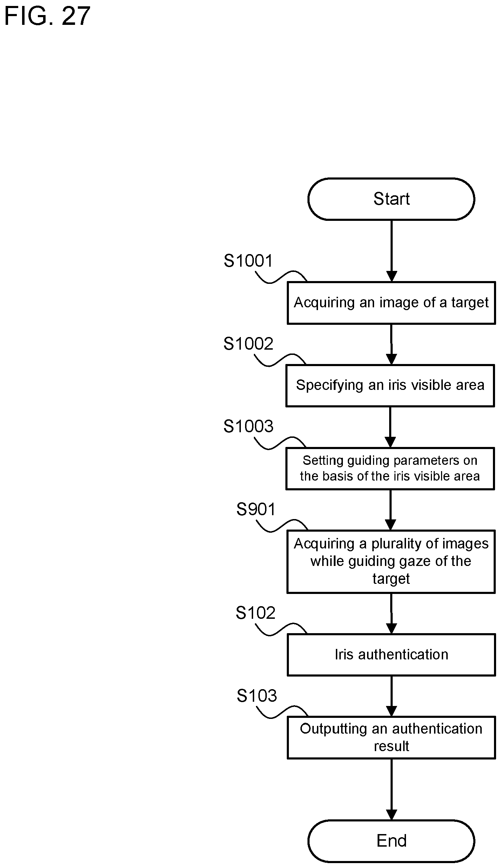

An authentication system 10 of an eleventh embodiment will be described with referring to FIGS. 26 and 27. The eleventh embodiment differs from the tenth embodiment described above in only a part of configuration and operation. Remaining portions of the eleventh embodiment may be the same as the first to the tenth embodiments. Therefore, portions, that differ from embodiments already described, of the eleventh embodiment will be described in detail, and descriptions of remaining portions, that are overlapped with embodiments already described, are appropriately omitted.

### (Functional configuration)

First, a functional configuration of the authentication system 10 of the eleventh embodiment will be described with referring to FIG. 26. FIG. 26 is a block diagram showing the functional configuration of the authentication system of the eleventh embodiment. Incidentally, in FIG. 26, the same sign is put to an element, which is similar to a component shown in FIG. 22.

As shown FIG. 26, the authentication system 10 of the eleventh embodiment comprises, as components for realizing its functions, an image acquiring unit 110, an iris authentication unit 120, a gaze guiding unit 200 and a guidance controlling unit 210. In other words, the authentication system 10 of the eleventh embodiment is configured to further comprise the guidance controlling unit 210 in addition to the configuration of the tenth embodiment (see FIG. 22). The guidance controlling unit 210 may be a processing block realized by the above-mentioned processor 11 (see FIG. 11), for example.

The guidance controlling unit 210 is configured to be able to set parameters (hereinafter, appropriately called "guiding parameter(s)") associated with guiding a gaze by the gaze guiding unit 200. Guiding parameters may include at least one of follows: a number of guidance (in other words, a number of directions for guiding), degree of angle for guiding (i.e., degree of movement of a gaze), and a parameter associated with a direction for guiding or the like of the gaze guiding unit 200. The guidance controlling unit 210 of this embodiment comprises an area determining unit 211. The guidance controlling unit 210 sets guiding parameters described above on the basis of a determining result of the area determining unit 211.

The area determining unit 211 is configured to be able to determine size of an iris visible area of a target. The area determining unit 211 may determine the size of the iris visible area by specifying the iris visible area from an image of the target, and then, by comparing size of the specified iris visible area and a predetermined threshold value recorded in advance, for example. Then, the guidance controlling unit 210 sets guiding parameters on the basis of the size of the iris visible area determined by the area determining unit 211. For example, the guidance controlling unit 210 may set guiding parameters so that the smaller the iris visible area determined by the area determining unit 211, the larger the number of guidance and the bigger the angle for guiding. In other words, the guidance controlling unit 210 may set guiding parameters so that the larger the iris visible area determined by the area determining unit 211, the fewer the number of guidance and the smaller the angle for guiding. The guidance controlling unit 210 may set only the number of guidance, may set only the angle for guiding, or may set both of the number of guidance and the angle for guiding.

### (Flow of operation)

Next, flow of operation of the authentication system 10 of the eleventh embodiment will be described with referring to FIG. 27. FIG. 27 is a flowchart showing the flow of the operation of the authentication system 10 of the eleventh embodiment. Incidentally, in FIG. 27, the same sign is put to a processing, which is similar to a processing shown in FIG. 23.

As shown in FIG. 27, when the authentication system 10 of the eleventh embodiment operates, first, the image acquiring unit 110 acquires an image, which is used for determining an iris visible area (step S1001). Then, the area determining unit 211 specifies the iris visible area from the image acquired by the image acquiring unit 110 (step S 1002). After, the guidance controlling unit 210 sets guiding parameters on the basis of size of the specified iris visible area (step S1003).

Next, the image acquiring unit 110 acquires a plurality of iris images from a target while the gaze guiding unit 200 guides a gaze of the target by outputting guiding information (specifically, guiding information on the basis of guiding parameters set by the guidance controlling unit 210) (step S901). Then, the iris authentication unit 120 performs iris authentication by using the plurality of iris images acquired by the image acquiring unit 110 (step S102). After, the iris authentication unit 120 outputs a result of iris authentication (step S103).

### (Technical effects)

Next, technical effects obtained by the authentication system 10 of the eleventh embodiment will be described.

As described with referring to FIGS. 26 and 27, in the authentication system 10 of the eleventh embodiment, guiding parameters are set on the basis of size of an iris visible area. Therefore, when the iris visible area is relatively small, since guiding is performed with a large number and/or a large angle, it is possible to acquire more information about an iris from a plurality of iris images. As a result, it is possible to perform high accuracy iris authentication when the iris visible area is small. On the other hand, when the iris visible area is relatively large, since guiding is performed with a small number and/or a small angle, it is possible to perform iris authentication without increasing burden on a user.

### <Twelfth Embodiment>

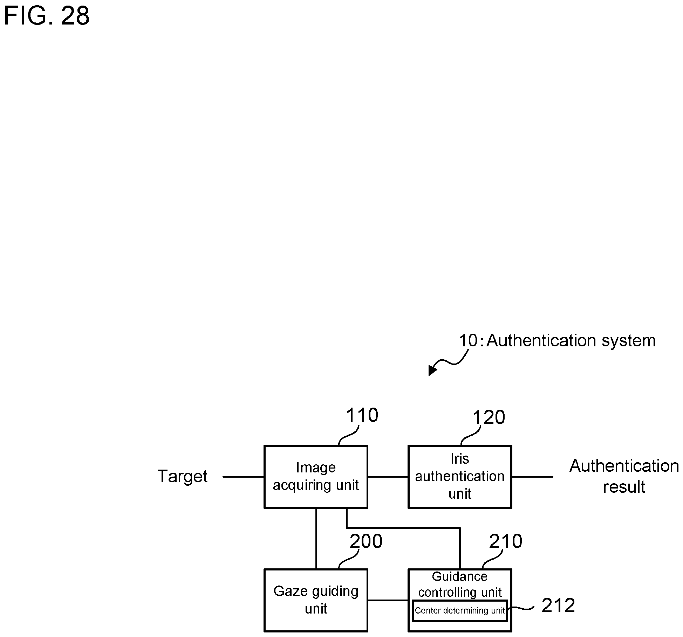

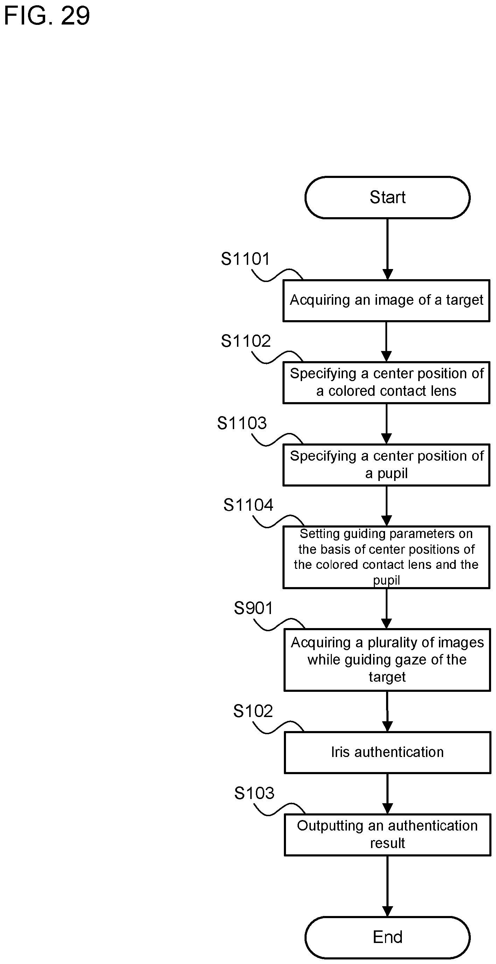

An authentication system 10 of a twelfth embodiment will be described with referring to FIGS. 28 and 29. The twelfth embodiment differs from the ninth to the eleventh embodiments described above in only a part of configuration and operation. Remaining portions of the eleventh embodiment may be the same as the first to the eleventh embodiments. Therefore, portions, that differ from embodiments already described, of the twelfth embodiment will be described in detail, and descriptions of remaining portions, that are overlapped with embodiments already described, are appropriately omitted.

### (Functional configuration)

First, a functional configuration of the authentication system 10 of the twelfth embodiment will be described with referring to FIG. 28. FIG. 28 is a block diagram showing the functional configuration of the authentication system of the twelfth embodiment. Incidentally, in FIG. 28, the same sign is put to an element, which is similar to a component shown in FIG. 26.

As shown in FIG. 28, the authentication system 10 of the twelfth embodiment comprises, as components for realizing its functions, an image acquiring unit 110, an iris authentication unit 120, a gaze guiding unit 200 and a guidance controlling unit 210. The guidance controlling unit 210 of the twelfth embodiment, in particular, is configured to comprise a center determining unit 212.

The center determining unit 212 is configured to be able to determine a center position of a colored contact lens 50 worn by a target and a center position of a pupil 21 of the target. The center determining unit 212 may specify areas of the colored contact lens 50 and the pupil 21 from an image of the target, and may determine center positions of the colored contact lens 50 and the pupil 21 on the basis of the specified areas. Then, the guidance controlling unit 210 sets guiding parameters on the basis of each of center positions determined by the center determining unit 212. For example, when the center position of the colored contact lens 50 and the center position of the pupil 21 are shifted in a certain specific direction, the guidance controlling unit 210 may set guiding parameters so that a gaze is guided to move in the opposite direction.

### (Flow of operation)

Next, flow of operation of the authentication system of the twelfth embodiment will be described with referring to FIG. 29. FIG. 29 is a flowchart showing the flow of the operation of the authentication system of the twelfth embodiment. Incidentally, in FIG. 29, the same sign is put to a processing, which is similar to a processing shown in FIG. 23.

As shown in FIG. 29, when the authentication system 10 of the twelfth embodiment operates, first, the image acquiring unit 110 acquires an image, which is used for determining center positions of the colored contact lens 50 and the pupil 21 (step S1101). Then, the center determining unit 212 specifies a center position of the colored contact lens 50 from the image acquired by the image acquiring unit 110 (step S1102). The center determining unit 212 specifies a center position of the pupil 21 from the image acquired by the image acquiring unit 110 (step S1103). After, the guidance controlling unit 210 sets guiding parameters on the basis of specified center positions of the colored contact lens 50 and the pupil 21 (step S1104).

Then, the image acquiring unit 110 acquires a plurality of iris images from a target while the gaze guiding unit 200 guides the gaze of the target by outputting guiding information (specifically, guiding information on the basis of guiding parameters set by the guidance controlling unit 210) (step S901). Then, the iris authentication unit 120 performs iris authentication by using the plurality of iris images acquired by the image acquiring unit 110 (step S102). After, the iris authentication unit 120 outputs a result of iris authentication (step S103).

### (Technical effects)

Next, technical effects obtained by the authentication system 10 of the twelfth embodiment will be described.

As described with referring to FIGS. 28 and 29, in the authentication system 10 of the twelfth embodiment, guiding parameters are set on the basis of center positions of the colored contact lens 50 and the pupil 21. Therefore, since the gaze of the target is guided to appropriate direction, it is possible to effectively acquire information about an iris 22 with a small number of guidance. As a result, it is possible to realize high accuracy iris authentication without increasing burden on a user.

### <Thirteenth Embodiment>

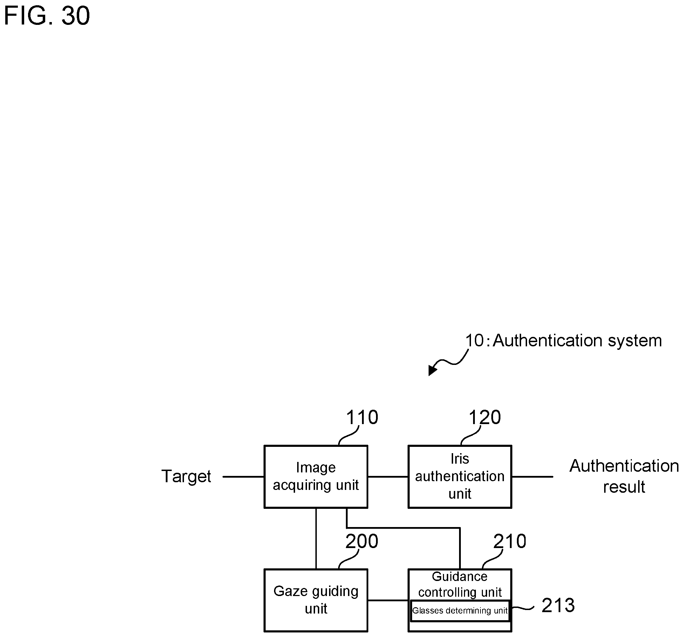

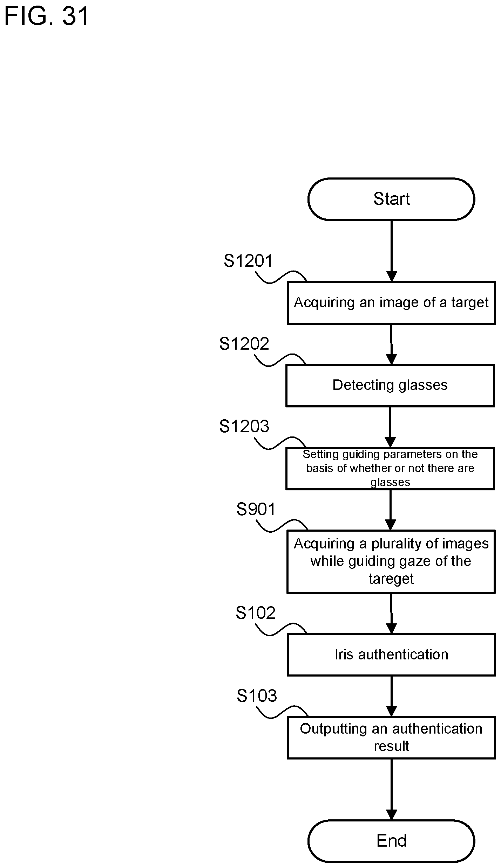

An authentication system 10 of a thirteen embodiment will be described with referring to FIGS. 30 and 31. The thirteenth embodiment differs from the ninth to the twelfth embodiments described above in only a part of configuration and operation. Remaining portions of the thirteenth embodiment may be the same as the first to the twelfth embodiments. Therefore, portions, that differ from embodiments already described, of the thirteenth embodiment will be described in detail, and descriptions of remaining portions, that are overlapped with embodiments already described, are appropriately omitted.

### (Functional configuration)

First, a functional configuration of the authentication system 10 of the thirteenth embodiment will be described with referring to FIG. 30. FIG. 30 is a block diagram showing the functional configuration of the authentication system of the thirteenth embodiment. Incidentally, in FIG. 30, the same sign is put to an element, which is similar to a component shown in FIG. 26.

As shown in FIG. 30, the authentication system 10 of the thirteen embodiment comprises, as components for realizing its functions, an image acquiring unit 110, an iris authentication unit 120, a gaze guiding unit 200 and guidance controlling unit 210. In particular, the guidance controlling unit 210 of the thirteenth embodiment is configured to comprise a glasses detecting unit 213.

The glasses detecting unit 213 is configured to be able to detect whether or not a target wears glasses. The glasses detecting unit 213 may detect glasses from an image of the target. Since existing techniques appropriately apply to a method for detecting glasses, explanation of the method is omitted. The guidance controlling unit 210 sets guiding parameters on the basis of a detection result by the glasses detecting unit 213. For example, the guidance controlling unit 210 may set guiding parameters so that a number of guidance increases and/or an angle for guiding increases when glasses are detected by the glasses detecting unit 213. The guidance controlling unit 210 may set guiding parameters so that the number of guidance decreases and/or the angle for guiding decreases when glasses are not detected by the glasses detecting unit 213. Moreover, when colored contact lenses 50 are detected in addition to glasses, the guidance controlling unit 210 may set guiding parameters so that the number of guidance becomes larger than that when only glasses are detected and/or the angle for guiding becomes larger than that when only glasses are detected. The guidance controlling unit 210 may set only the number of guidance, may set only the angle for guiding, and may set both of the number of guidance and the angle for guiding.

### (Flow of operation)

Next, flow of operation of the authentication system 10 of the thirteenth embodiment with referring to FIG. 31. FIG. 31 is a flowchart showing the flow of the operation of the authentication system of the thirteenth embodiment. Incidentally, in FIG. 31, the same sign is put to a processing, which is similar to a processing shown in FIG. 23.

As shown in FIG. 31, when the authentication system 10 of the thirteenth embodiment operates, first, the image acquiring unit 110 acquires an image, which is used for detecting glasses (step S1201). Then, the glasses detecting unit 213 detects whether or not there are glasses from the image acquired by the image acquiring unit 110 (step 1202). After, the guidance controlling unit 210 set guiding parameters on the basis of a detection result of glasses (step S1203).

Then, the image acquiring unit 110 acquires a plurality of iris images from a target while the gaze guiding unit 200 guides a gaze of the target by outputting guiding information (specifically, guiding information on the basis of guiding parameters set by the guidance controlling unit 210) (step S901). Then, the iris authentication unit 120 performs iris authentication by using the plurality of iris images acquired by the image acquiring unit 110 (step S102). And then, the iris authentication unit 120 outputs a result of iris authentication (step S103).

### (Technical effects)

Next, technical effects obtained by the authentication system 10 of the thirteenth embodiment will be described.

As described with referring to FIGS. 30 and 31, in the authentication system 10 of the thirteenth embodiment, guiding parameters are set according to whether or not a target wears glasses. Therefore, since guidance is performed with a large number and/or a large angle when glasses are detected, it is possible to acquire more information about an iris from a plurality of iris images. As a result, it is possible to perform high accuracy iris authentication even if it is difficult to acquire information about an iris 22 due to presence of glasses.

### <Fourteenth Embodiment>

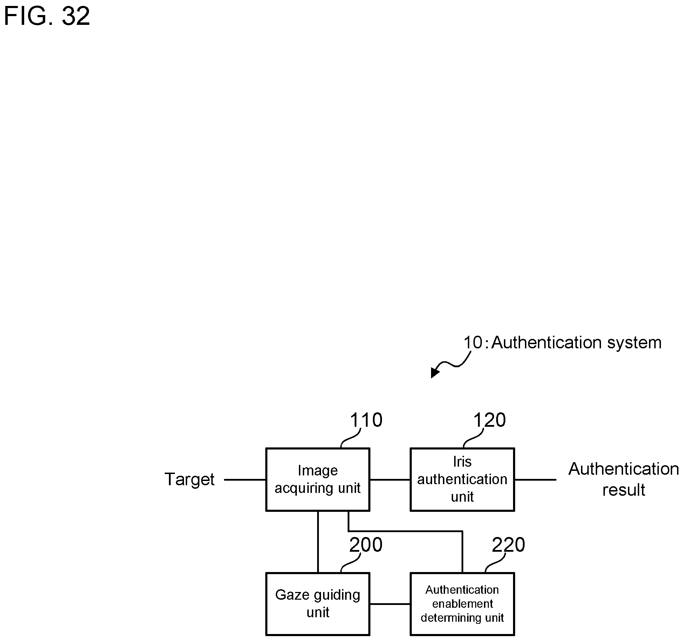

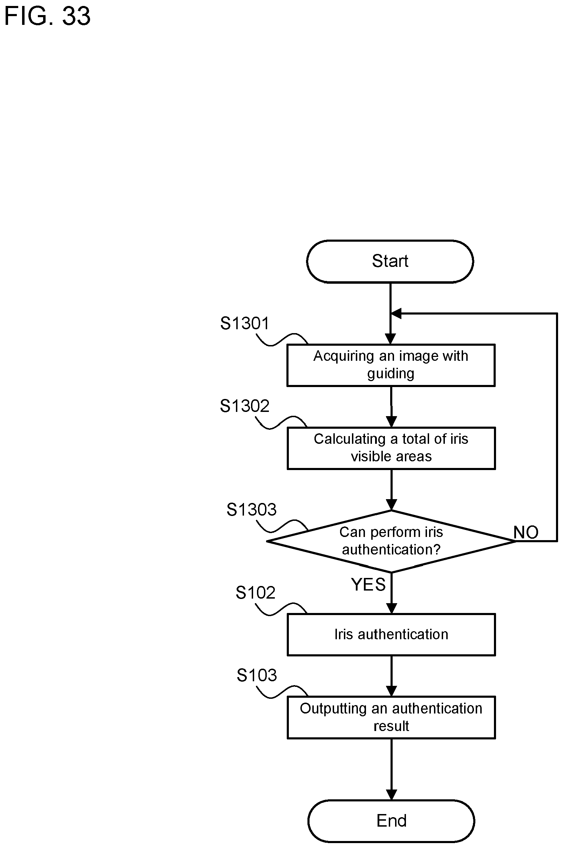

An authentication system 10 of a fourteenth embodiment will be described with referring to FIGS. 32 and 33. The fourteenth embodiment differs from the ninth to the thirteenth embodiments described above in only a part of configuration and operation. Remaining portions of the fourteenth embodiment may be the same as the first to the thirteenth embodiments. Therefore, portions, that differ from embodiments already described, of the fourteenth embodiment will be described in detail, and descriptions of remaining portions, that are overlapped with embodiments already described, are appropriately omitted.

### (Functional configuration)

First, a functional configuration of the authentication system 10 of the fourteenth embodiment will be described with referring to FIG. 32. FIG. 32 is a block diagram showing the functional configuration of the authentication system of the fourteenth embodiment. Incidentally, in FIG. 32, the same sign is put to an element, which is similar to a component shown in FIG. 22.

As shown in FIG. 32, the authentication system 10 of the fourteenth embodiment comprises, as components for realizing its functions, an image acquiring unit 110, an iris authentication unit 120, a gaze guiding unit 200 and an authentication enablement determining unit 220. In other words, the authentication system 10 of fourteenth embodiment is configured to further comprise the authentication enablement determining unit 220 in addition to the configuration of the tenth embodiment (see FIG. 22). The authentication enablement determining unit 220 may be a processing block realized by the above-mentioned processor 11 (see FIG. 1), for example.

The authentication enablement determining unit 220 is configured to be able to determine whether or not a total of iris visible areas in a plurality of iris images (in other words, a total of information about an iris 22 obtained from a plurality of images) reaches a value required in iris authentication. The authentication enablement determining unit 220 may perform determination on the basis of a synthesized image synthesized a plurality of images (see the third embodiment), for example. The authentication enablement determining unit 220 may perform determination on the basis of a synthesized feature obtained by synthesizing features extracted from a plurality of images (see the fifth embodiment).

The gaze guiding unit 200 is configured to be able to output guiding information according to a determination result of the authentication enablement determining unit 220. Specifically, the gaze guiding unit 200 is configured to output new guiding information when the total of iris visible areas does not reach the value required in iris authentication.

### (Flow of operation)

Next, flow of operation of the authentication system 10 of the fourteenth embodiment will be described with referring to FIG. 33. FIG. 33 is a flowchart showing the flow of the operation of the authentication system of the fourteenth embodiment. Incidentally, in FIG. 33, the same sign is put to a processing, which is similar to a processing shown in FIG. 23.

As shown in FIG. 33, when the authentication system 10 of the fourteenth embodiment operates, first, the image acquiring unit 110 acquires iris images from a target while the gaze guiding unit 200 guides a gaze of the target by outputting guiding information (step S1301). Then, the authentication enablement determining unit 220 calculates a total of iris visible areas from captured images (step S1302).

Then, the authentication enablement determination unit 220 determines whether or not the calculated total of iris visible areas reaches the value required in iris authentication (in other words, whether or not it is possible to perform iris authentication appropriately by using captured images) (step S1303). When the total of iris visible areas does not reach the value required in iris authentication (step S1303: NO), this processing is started again from the step S1301. In other words, the gaze guiding unit 200 outputs new guiding information, and the image acquiring unit 110 acquires new iris images from the target. As a result, guidance and acquiring images repeat until the total of iris visible areas reaching the value required in iris authentication.

Incidentally, outputted new guiding information may be information corresponding to an iris area which is missing at the moment. For example, if an iris visible area corresponding to the case where a target turns to the right is missing, guiding information for making the target turn to the right may be outputted to the target. The authentication enablement determining unit 220 may be configured to have a function for specifying a missing iris visible area in order to realize the above-mentioned operation.

On the other hand, when the total of iris visible areas reaches the value required in iris authentication (step S1303: YES), the iris authentication unit 120 performs iris authentication by using the plurality of iris images acquired by the image acquiring unit 110 (step S102). After, the iris authentication unit 120 outputs a result of iris authentication (step S103).

### (Technical effects)

Next, technical effects obtained the authentication system 10 of the fourteenth embodiment will be described.

As described with referring to FIGS. 32 and 33, in the authentication system 10 of the fourteenth embodiment, new guiding information is outputted when the total of iris visible areas does not reach the value required in iris authentication. Therefore, it is possible to certainly acquire a number of images suitable for iris authentication. Moreover, if it is configured to stop outputting guiding information at a point of time, at which the total of iris visible areas reaches the value required in iris authentication, it is possible to prevent acquiring excessive number of images for iris authentication (i.e., acquiring unnecessary images).

### <Fifteenth Embodiment>

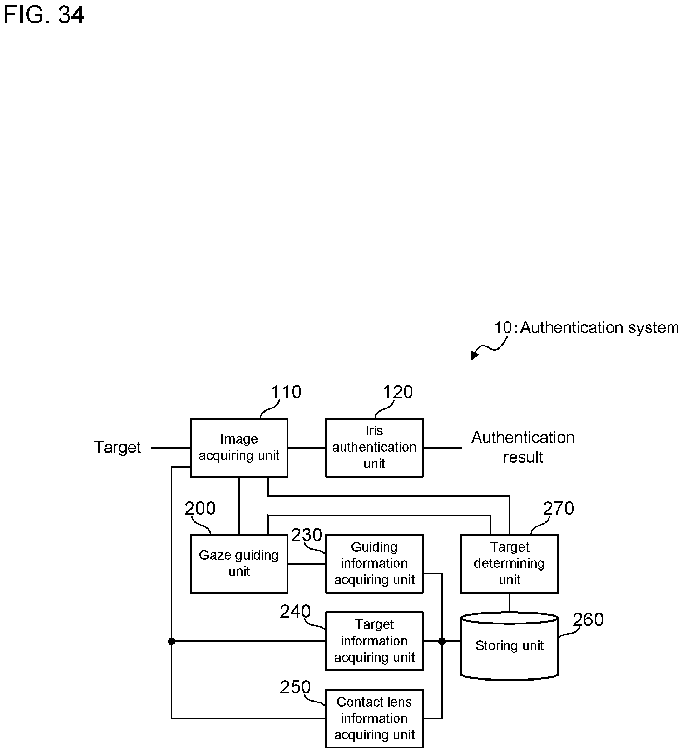

An authentication system 10 of a fifteenth embodiment will be described with referring to FIGS. 34 to 36. The fifteenth embodiment differs from the ninth to the fourteenth embodiments described above in only a part of configuration and operation. Remaining portions of the fifteenth embodiment may be the same as the first to the fourteenth embodiments. Therefore, portions, that differ from embodiments already described, of the fifteenth embodiment will be described in detail, and descriptions of remaining portions, that are overlapped with embodiments already described, are appropriately omitted.

### (Functional configuration)

First, a functional configuration of the authentication system 10 of the fifteenth embodiment will be described with referring to FIG. 34. FIG. 34 is a block diagram showing the functional configuration of the authentication system of the fifteenth embodiment. Incidentally, in FIG. 34, the same sign is put to an element, which is similar to a component shown in FIG. 22.

As shown in FIG. 34, the authentication system 10 of the fifteenth embodiment comprises, as components for realizing its functions, an image acquiring unit 110, an iris authentication unit 120, a gaze guiding unit 200, a guiding information acquiring unit 230, a target information acquiring unit 240, a contact lens information unit 250, a storing unit 260 and a target determining unit 270. In other words, the authentication system 10 of the fifteenth embodiment is configured to further comprise the guiding information acquiring unit 230, the target information acquiring unit 240, the contact lens information unit 250, the storing unit 260 and the target determining unit 270 in addition to the configuration of the tenth embodiment (see FIG. 22). Incidentally, the guiding information acquiring unit 230, the target information acquiring unit 240, the contact lens information unit 250 and the target determining unit 270 may be processing blocks realized by the above-mentioned processor 11 (see FIG. 1), for example. The storing unit 260 may be a database realized by the above-mentioned storage device 14 (see FIG. 1), for example.

The guiding information acquiring unit 230 is configured to be able to acquire previous guiding information, which has been outputted by the gaze guiding unit 200. Guiding information may include information about a number of guidance, a degree of an angle for guiding, a direction for guiding or the like. The authentication system 10 is configured that guiding information acquired by the guiding information acquiring unit 230 is outputted to the storing unit 260.

The target information acquiring unit 240 is configured to be able to acquire information for specify a target (hereinafter, appropriately called "target information"). Target information may include personal information such as name, address, gender and age, and biometric information (e.g., features of a face and an iris, etc.), for example. The target information acquiring unit 240 may acquire target information from an image of a target acquired by the image acquiring unit 110. The target information acquiring unit 240 may acquire target information from a terminal, a card or the like a target has. The authentication system 10 is configured that target information acquired by the target information acquiring unit 240 is outputted to the storing unit 260.

The contact lens information acquiring unit 250 is configured to be able to acquire information for specifying colored contact lenses 50 worn by a target (hereinafter, appropriately called "contact lens information"). Contact lens information may include information about a size and/or a pattern of a contact lens. The contact lens information acquiring unit 250 may acquire contact lens information from an image of a target acquired by the image acquiring unit 110. The authentication system 10 is configured that contact lens information acquired by the contact lens information acquiring unit 250 is outputted to the storing unit 260.

The storing unit 260 is configured to be able to store guiding information acquired by the guiding information acquiring unit 230, target information acquired by the target information acquiring unit 240 and contact lens information acquired by the contact lens information acquiring unit 250 associated with each other. The authentication system 10 is configured that each information stored in the storing unit 260 can be appropriately read by the target determining unit 270.

The target determining unit 270 is configured to be able to specify a target and colored contact lenses 50 worn by the target from an image acquired by the image acquiring unit 110, and determine whether or not a combination of the target and the colored contact lenses 50 is stored in the storing unit 260. When the combination of the target and the colored contact lenses 50 is stored in the storing unit 260, the target determining unit 270 is configured to control the gaze guiding unit 200 by reading guiding information associated with the above-mentioned combination so that guidance is performed on the basis of the guiding information. Incidentally, specifying colored contact lenses 50 may be determining whether or not colored contact lenses 50 are the same kind and have similar property, not limited to determine whether or not colored contact lenses 50 are the same. For example, it is determined whether or not radii of inner circles of the colored contact lens 50 are the same when patterns of the colored contact lens 50 are different. And then, it may be determined that the colored contact lens 50 is similar when radii are almost the same even if patterns are different. It may be determined that the colored contact lens 50 is the same kind by using degree of similarity of strength of a pattern.

### (Storing operation)

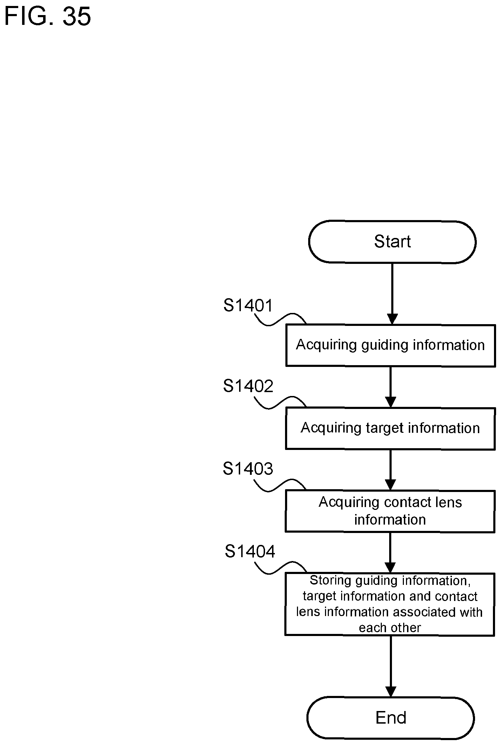

Next, flow of storing operation (i.e., operation performed when information is accumulated in the storing unit 260) of the authentication system 10 of the fifteenth embodiment with referring to FIG. 35. FIG. 35 is a flowchart showing the storing operation of the authentication system of the fifteenth embodiment.

As shown in FIG. 35, in the authentication system 10 of the fifteenth embodiment, first the guiding information acquiring unit 230 acquires guiding information (step S1401). The target information acquiring unit 240 acquires target information (step S1402). The contact lens information acquiring unit 250 acquires contact lens information (step S1403). Incidentally, processing of steps S1401 to S1403 may be performed changed the order, or in parallel.

Then, the storing unit 260 stores the guiding information acquired by the guiding information acquiring unit 230, the target information acquired by the target information acquiring unit 240 and the contact lens information acquired by the contact lens information acquiring unit 250 associated with each other (step S1404).

### (Authentication operation)

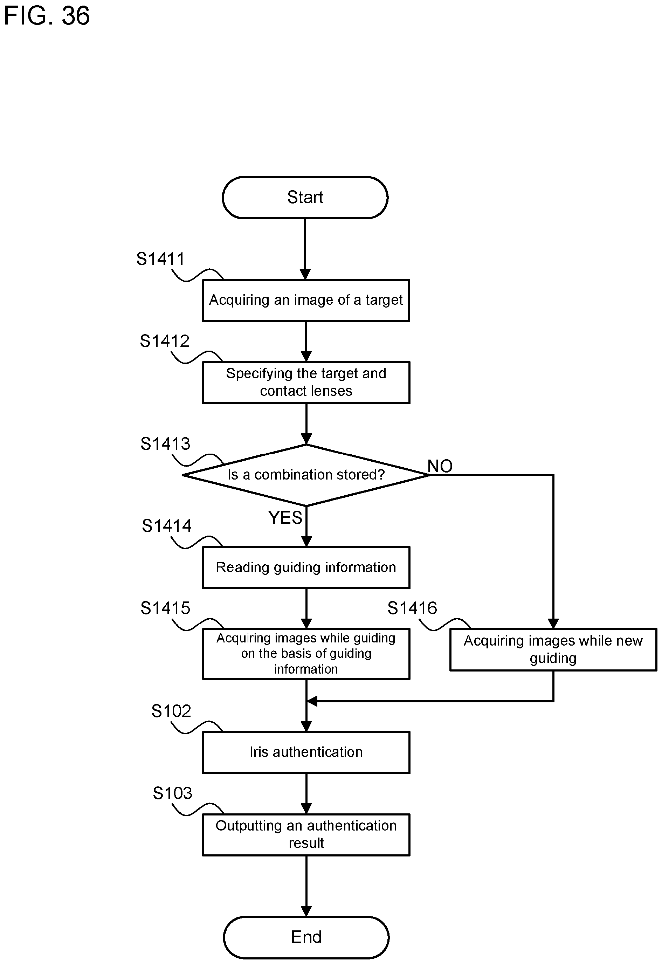

Next, flow of authentication operation (i.e., operation performed when iris authentication is performed by acquiring an image of a target) of the authentication system 10 of the fifteenth embodiment with referring to FIG. 36. FIG. 36 is a flowchart showing the flow of the authentication operation of the authentication system of the fifteenth embodiment.

As shown in FIG. 36, in the authentication operation of the authentication system 10 of the fifteenth embodiment, first, the image acquiring unit 110 acquires an image for specifying a target and colored contact lenses 50 (step S1411). Then, the target determining unit 270 specifies the target and colored contact lenses 50 (step S1412).

Then, the target determining unit 270 determines whether or not a combination of the specified target and the specified colored contact lenses 50 is stored in the storing unit 260 (step S1413). In other words, the target determining unit 270 determines whether or not iris authentication has been performed for the target who has worn the same-colored contact lenses 50.

When the combination of the target and the colored contact lenses 50 is stored in the storing unit 260 (step S1413: YES), the target determining unit 270 reads guiding information associated with the combination (step S1414). Then, the image acquiring unit 110 acquires a plurality of images of the target while the target determining unit 270 controls the gaze guiding unit 200 so that guidance is performed on the basis of the read guiding information (step S1415).

On the other hand, when the combination of the target and the colored contact lenses 50 is not stored in the storing unit 260 (step S1413: NO), the target determining unit 270 does not read guiding information and does not control the gaze guiding unit 200. In this case, the image acquiring unit 110 acquires a plurality of images of the target while the gaze guiding unit 200 normally performs guiding (step S1416).

Then, the iris authentication unit 120 performs iris authentication by using the plurality of images acquired by the image acquiring unit 110 (step S102). After, the iris authentication unit 120 outputs a result of iris authentication (step S103).

### (Technical effects)

Next, technical effects obtained by the authentication system 10 of the fifteenth embodiment will be described.

As described with referring to FIGS. 34 to 36, in the authentication system 10 of the fifteenth embodiment, when iris authentication has been performed for a target who has worn the same or similar to colored contact lenses 50, guiding a gaze is performed by using previous guiding information. Therefore, it is possible to perform effectively guiding by using previous guiding information.

### <Sixteenth Embodiment>

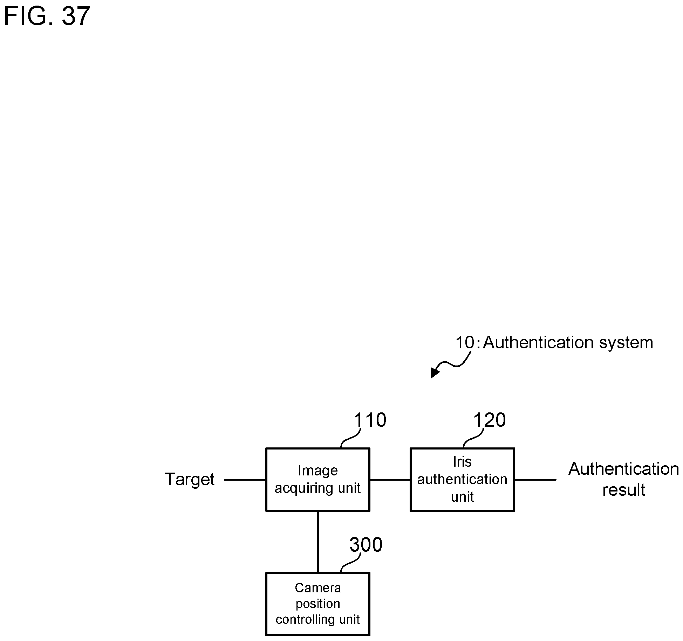

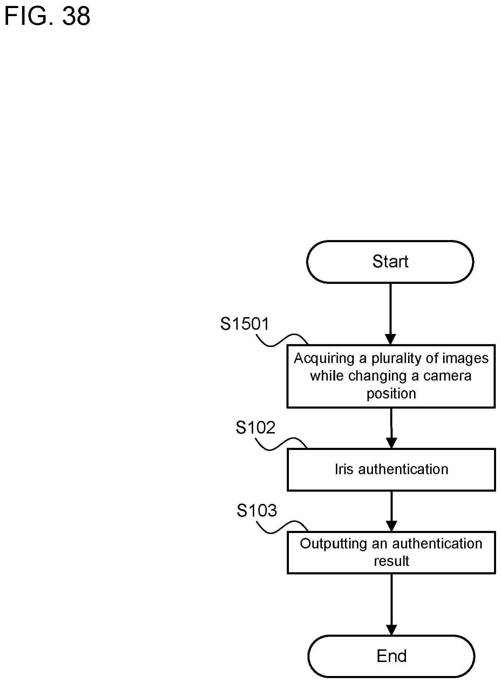

An authentication system 10 of a sixteenth embodiment will be described with referring to FIGS. 37 and 38. The sixteenth embodiment differs from the first to the fifteenth embodiments described above in only a part of configuration and operation. Remaining portions of the sixteenth embodiment may be the same as the first to the fifteenth embodiments. Therefore, portions, that differ from embodiments already described, of the sixteenth embodiment will be described in detail, and descriptions of remaining portions, that are overlapped with embodiments already described, are appropriately omitted.

### (Functional configuration)

First, a functional configuration of the authentication system 10 of the sixteenth embodiment will be described with referring to FIG. 37. FIG. 37 is a block diagram showing the functional configuration of the authentication system of the sixteenth embodiment. Incidentally, in FIG. 37, the same sign is put to an element, which is similar to a component shown in FIG. 2.

As shown in FIG. 37, the authentication system 10 of the sixteenth embodiment comprises, as components for realizing its functions, an image acquiring unit 110, an iris authentication unit 120 and a camera position controlling unit 300. In other words, the authentication system 10 of the sixteenth embodiment is configured to further comprise the camera position controlling unit 300 in addition to the configuration of the first embodiment (see FIG. 2). The camera position controlling unit 300 may be a processing block realized by the above-mentioned processor 11 (see FIG. 1), for example.

The camera position controlling unit 300 is configured to be able to control a position of a camera 18 to capture an eye or a target from multiple angles. Specifically, the camera position controlling unit 300 is configured to be able to capture the eye of the target from multiple angles by changing a relative position of the camera 18 to the target.

### (Flow of operation)

Next, flow of operation of the authentication system 10 of the sixteenth embodiment will be described with referring to FIG. 38. FIG. 38 is a flowchart showing the flow of the operation of the authentication system of the sixteenth embodiment. Incidentally, in FIG. 38, the same sign is put to a processing, which is similar to a processing shown in FIG. 5.

As shown in FIG. 38, when the authentication system 10 of the sixteenth embodiment operates, first, the image acquiring unit 100 acquires a plurality of iris images from a target while the camera position controlling unit 300 changes the position of the camera 18 (step S1501). For example, the camera position controlling unit 300, first, locates the camera 18 at the front of the target to capture an image of the target. Then, the camera position controlling unit 300 locates the camera 18 at the right of the target to capture an image of the target. Incidentally, the above-mentioned gaze guiding may be performed in addition to changing the position of the camera 18. In other words, a plurality of images captured from multiple angles may be acquired by performing both of gaze guiding and moving the camera 18.

Then, the iris authentication unit 120 performs iris authentication by using the plurality of iris images acquired by the image acquiring unit 110 (i.e., images captured from multiple angles by moving the camera 18) (step S102). After, the iris authentication unit 120 outputs a result of iris authentication (step S103).

### (Technical effects)

Next, technical effects obtained by the authentication system 10 of the sixteenth embodiment will be described.

As described with referring to FIGS. 37 and 38, in the authentication system 10 of the sixteenth embodiment, a plurality of images are captured by controlling the position of the camera 18. Therefore, it is possible to capture an eye of a target from multiple angles without the target moving his/her eyes. It is possible to reduce a distance (i.e., an angle) of the eye movement of the target. As a result, it is possible to perform high accuracy iris authentication without increasing labor of the target.

### <Seventeenth Embodiment>

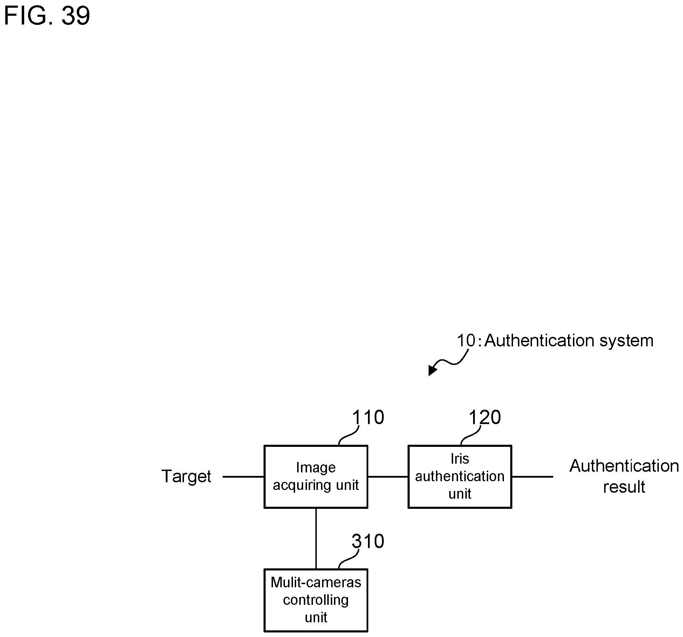

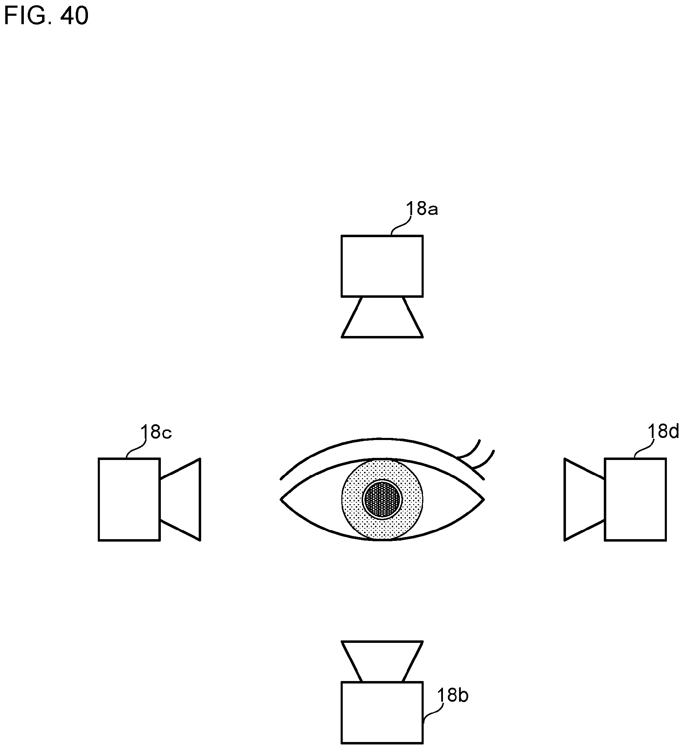

An authentication system 10 of a seventeenth embodiment will be described with referring to FIGS. 39 and 40. The seventeenth embodiment differs from the first to the sixteenth embodiments described above in only a part of configuration and operation. Remaining portions of the seventeenth embodiment may be the same as the first to the sixteenth embodiments. Therefore, portions, that differ from embodiments already described, of the seventeenth embodiment will be described in detail, and descriptions of remaining portions, that are overlapped with embodiments already described, are appropriately omitted.

### (Functional configuration)

First, a functional configuration of the authentication system 10 of the seventeenth embodiment will be described with referring to FIG. 39. FIG. 39 is a block diagram showing the functional configuration of the authentication system of the seventeenth embodiment. Incidentally, in FIG. 39, the same sign is put to an element, which is similar to a component shown in FIG. 2.

As shown in FIG. 39, the authentication system 10 of the seventeenth embodiment comprises, as components for realizing its functions, an image acquiring unit 110, an iris authentication unit 120 and a multi-cameras controlling unit 310. In other words, the authentication system 10 of the seventeenth embodiment is configured to further comprise the multi-cameras controlling unit 310 in addition to the configuration of the first embodiment (see FIG. 2). The multi-cameras controlling unit 310 may be a processing block realized by the above-mentioned processor 11 (see FIG. 1), for example.

The multi-cameras controlling unit 310 is configured to be able to control a plurality of cameras 18. The plurality of cameras 18, which are controlled by the multi-cameras controlling unit 310, are set at angles, which are different from each other, to an eye of a target. In other words, the multi-cameras controlling unit 310 controls each of the plurality of cameras 18 to capturing the eye of the target from multiple angles.

### (Disposition and controlling operation of a plurality of cameras)

Next, positions, at which a plurality of cameras are located, controlled by the authentication system 10 of the seventeenth embodiment (specifically, the multi-cameras controlling unit 310, and controlling operation for controlling positions will be described with referring to FIG. 40. FIG. 40 is a plane view showing a position relationship of the plurality of cameras controlled by the authentication system of the seventeenth embodiment.

As shown in FIG. 40, cameras 18 controlled by the authentication system 10 of the seventeenth embodiment may include a camera 18a, which is located for capturing an eye of a target from above, a camera 18b, which is located for capturing the eye of the target from below, a camera 18c, which is located for capturing the eye of the target from the left, and a camera 18d, which is located for capturing the eye of the target from the right. In this case, the multi-cameras controlling unit 310 may perform capturing by controlling cameras 18a, 18b, 18c and 18d in order. For example, the multi-cameras controlling unit 310 may perform capturing by the camera 18b after capturing by the camera 18a has ended, may perform capturing by the camera 18c after capturing by the camera 18b has ended, and may perform capturing by the camera 18d after capturing by the camera 18c has ended. The multi-cameras controlling unit 310 may perform capturing by at least two cameras of cameras 18a, 18b, 18c and 18d at the same time. For example, the multi-cameras controlling unit 310 may perform capturing by all of cameras 18a, 18b, 18c and 18d at the same time. The multi-cameras controlling unit 310 may perform capturing by cameras 18c and 18d at the same time after capturing by cameras 18a and 18b have ended.

### (Technical effects)

Next, technical effects obtained by the authentication system 10 of the seventeenth embodiment will be described.

As described with referring to FIGS. 39 and 40, in the authentication system of the seventeenth embodiment, a plurality of images are captured by controlling cameras 18. Therefore, it is possible to capture an eye of a target from multiple angles without the target moving his/her eyes. As a result, it is possible to perform high accuracy iris authentication without increasing labor of the target.

### <Eighteenth Embodiment>

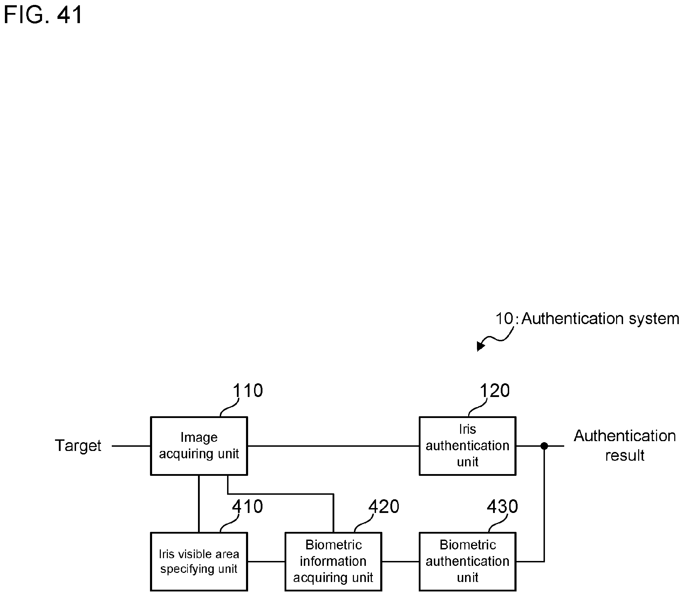

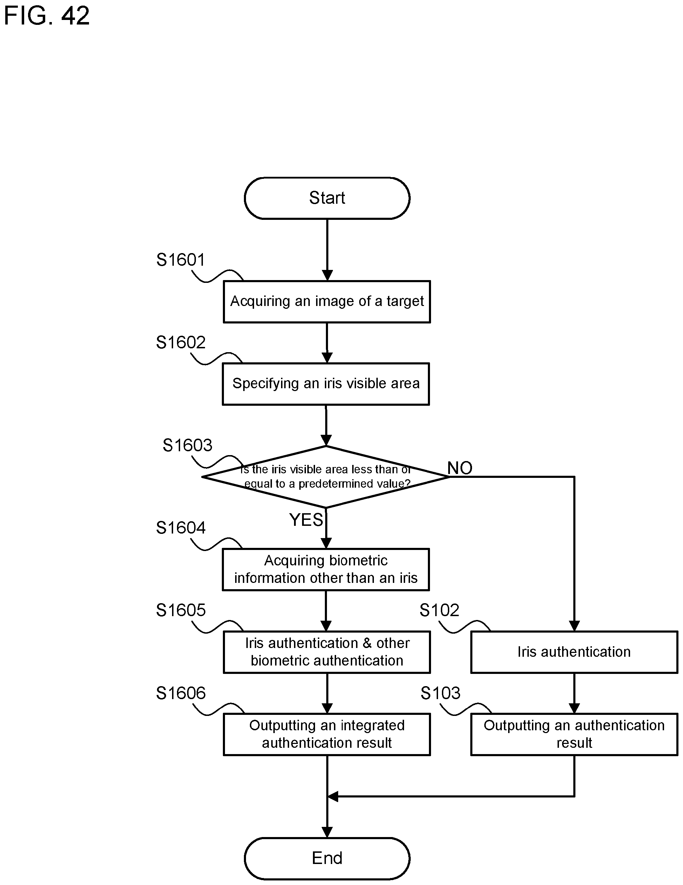

An authentication system 10 of an eighteenth embodiment will be described with referring to FIGS. 41 and 42. The eighteenth embodiment differs from the first to the sixteenth embodiments described above in only a part of configuration and operation. Remaining portions of the eighteenth embodiment may be the same as the first to the sixteenth embodiments. Therefore, portions, that differ from embodiments already described, of the eighteenth embodiment will be described in detail, and descriptions of remaining portions, that are overlapped with embodiments already described, are appropriately omitted.

### (Functional configuration)

First, a functional configuration of the authentication system 10 of the eighteenth embodiment will be described with referring to FIG. 41. FIG. 41 is a block diagram showing the functional configuration of the authentication system of the eighteenth embodiment. Incidentally, in FIG. 41, the same sign is put to an element, which is similar to a component shown in FIG. 2.

As shown in FIG. 41, the authentication system 10 of the eighteenth embodiment comprises, as components for realizing its functions, an image acquiring unit 110, an iris authentication unit 120, an iris visible area specifying unit 410, a biometric information acquiring unit 420 and a biometric authentication unit 430. In other words, the authentication system 10 of the eighteenth embodiment is configured to further comprise the iris visible area specifying unit 410, the biometric information acquiring unit 420 and the biometric authentication unit 430 in addition to the configuration of the first embodiment (see FIG. 2). The iris visible area specifying unit 410, the biometric information acquiring unit 420 and the biometric authentication unit 430 may be processing blocks realized by the above-mentioned processor 11 (see FIG. 1), for example.

The iris visible area specifying unit 410 is configured to be able to specify an iris visible area of a target. The iris visible area specifying unit 410 specifies the iris visible area from an image of the target, for example. The iris visible area specifying unit 410 is configured to be able to determine whether or not the specified iris visible area is less than a predetermined value. The "predetermined value" is a value corresponding to a size of an iris visible area required for appropriately performing iris authentication. The iris visible area specifying unit 410 controls the biometric authentication unit 430 to perform biometric authentication described later when the iris visible area is less than the predetermined value.

The biometric information acquiring unit 420 is configured to be able to acquire biometric information, which is used for biometric authentication performed by the biometric authentication unit 430, from a target. The biometric information acquiring unit 420 may be configured to be able to acquiring the biometric information from an image (e.g., an iris image) of the target acquired by the image acquiring unit 110. However, the biometric information acquired by the biometric acquiring unit 420 is different from biometric information used by the iris authentication unit 120 (i.e., information about an iris). Retina information, around eye information (i.e., Periocular information) or the like are cited as examples of the biometric information acquired by the biometric information acquiring unit 420.

The biometric authentication unit 430 is configured to be able to perform biometric authentication by using the biometric information acquired by the biometric information acquiring unit 420. The biometric authentication unit 430 performs biometric authentication by using the biometric information which is different from biometric information used by the iris authentication unit 120. An authentication result of the biometric authentication unit 430 may be integrated with an authentication result of the iris authentication unit 120.

### (Flow of operation)

Next, flow of operation of the authentication system 10 of the eighteenth embodiment will be described with referring to FIG. 42. FIG. 42 is a flowchart showing the flow of the operation of the authentication system of the eighteenth embodiment. Incidentally, in FIG. 42, the same sign is put to a processing, which is similar to a processing shown in FIG. 5.

As shown in FIG. 42, when the authentication system 10 of the eighteenth embodiment operates, first, the image acquiring unit 110 acquires an image, which is used for specifying an iris visible area (step S1601). Then, the iris visible area specifying unit 410 specifies the iris visible area on the basis of the image acquired by the image acquiring unit 110 (step S1602).

Then, the iris visible area specifying unit 410 determines whether or not the specified iris visible area is less than the predetermined value (step S1603). When the iris visible area is less than the predetermined value (step S1603: YES), the biometric information acquiring unit 420 acquires biometric information, which is other than an iris, from the image of a target (step S1604). Then, iris authentication is performed by the iris authentication unit 120 and biometric authentication is performed by the biometric authentication unit 430 (step S1605). After, an authentication result of the iris authentication unit 120 and an authentication result of the biometric authentication unit 430 are integrated and then outputted (step S1606).

On the other hand, when the iris visible area is greater than the predetermined value (step S1606: NO), the iris authentication unit 120 performs iris authentication by using a plurality of iris images acquired by the image acquiring unit 110 (step S102). In other words, in this case, biometric authentication unit 430 does not perform biometric authentication. After, the iris authentication unit 120 outputs a result of iris authentication (step S103).

### (Technical effects)

Next, technical effects obtained by the authentication system 10 of the eighteenth embodiment will be described.

As described with referring to FIGS. 41 and 42, in the authentication system 10 of the eighteenth embodiment, biometric authentication is performed by using biometric information other than an iris when an iris visible area is less than the predetermined value. Therefore, it is possible to compensate authentication accuracy as a whole by performing biometric authentication by using biometric information other than an iris even when accuracy of iris authentication may decrease due to a small iris visible area.

A processing method, in which a program, which makes the configuration of each of above-mentioned embodiments operate, is recorded on a recording medium, and then, the program is executed at a computer by reading the program recorded on the recording medium as codes so that functions of each of embodiments are realized, is included in a category of each of embodiments described above. In other words, a computer readable recording medium is included in the category of each of embodiments. The program itself is also included in each of embodiments in addition to a recording medium, on which the above-mentioned program is recorded. Additionally, it may be configured to be able to download a part of or all of the program from a server to a user terminal when the program is stored in the server.

For example, a floppy disk, a hard disk, an optical disk, a magneto-optical disk, a CD-ROM, a magnetic tape, a non-volatile memory card and a ROM can be used as the recording medium. It is not limited to perform processing with only the program recorded in the recording medium. An aspect which performs processing by operating on an operating system and by cooperating with other software(s) and/or function(s) of extension board(s) is included in each of embodiments.

### <Supplementary Notes>

In regard to embodiments described above, it may be further described as following supplementary notes, but it is not limited.

### (Supplementary note 1)

An authentication system described in a supplementary note 1 is an authentication system comprising: an image acquiring means for acquiring a plurality of images by capturing an eye of a target wearing colored contact lenses from multiple angles; and an iris authentication means for performing iris authentication for the target by using the plurality of images.

### (Supplementary note 2)

An authentication system described in a supplementary note 2 is the authentication system according to the supplementary note 1, wherein the authentication system further comprises a detecting means for detecting that the target wears the colored contact lenses, and the iris authentication means performs the iris authentication by using the plurality of images when the target wears the colored contact lenses, and performs the iris authentication by using images, a number of which is less than a number of the plurality of images, when the target does not wear the colored contact lenses.

### (Supplementary note 3)

An authentication system described in a supplementary note 3 is the authentication system according to the supplementary note 1 or 2, wherein the authentication system further comprises an image synthesizing means for generating a synthesized image by synthesizing iris areas that are not covered by the colored contact lenses in the plurality of images, and the iris authentication means performs the iris authentication for the target by using the synthesized image.

### (Supplementary note 4)

An authentication system described in a supplementary note 4 is the authentication system according to the supplementary note 3, wherein the image synthesizing means performs a correction for making size of a pupil in each of the plurality of images uniform, and then generates the synthesized image.

### (Supplementary note 5)

An authentication system described in a supplementary note 5 is the authentication system according to the supplementary note 1 or 2, wherein the authentication system further comprises a feature synthesizing means for generating a synthesized feature by synthesizing features of iris areas that are not covered by the colored contact lenses in the plurality of images, and the iris authentication means performs the iris authentication by using the synthesized feature.

### (Supplementary note 6)

An authentication system described in a supplementary note 6 is the authentication system according to the supplementary note 5, wherein the synthesizing feature means performs a position correction for a plurality of features extracted from each of the plurality of images so that matching degree of features corresponding to common areas is high, and then performs the iris authentication for the target.

### (Supplementary note 7)

An authentication system described in a supplementary note 7 is the authentication system according to any one of supplementary notes 1 to 6, wherein the authentication system further comprises a first determining means for determining whether or not the iris authentication for the target is performed by using the plurality of images on the basis of a ratio of iris areas that are not covered by the colored contact lenses, to an entire iris.

### (Supplementary note 8)

An authentication system described in a supplementary note 8 is the authentication system according to any one of supplementary notes 1 to 6, wherein the iris authentication system further comprises a second determining means for determining whether or not the iris authentication for the target is performed by using the plurality of images on the basis of a value that is obtained by subtracting a radius of a pupil of the target from a radius of an inner circle of the colored contact lens and a value that is obtained by subtracting the radius of the pupil of the target from a radius of an iris of the target.

### (Supplementary note 9)

An authentication system described in a supplementary note 9 is the authentication system according to any one of supplementary notes 1 to 8, wherein the authentication system further comprises a gaze guiding means for guiding gaze of the target in order to capture the eye of the target from the multiple angles.

### (Supplementary note 10)

An authentication system described in a supplementary note 10 is the authentication system according to the supplementary note 9, wherein the gaze guiding means changes, on the basis of size of iris area which is not covered by the colored contact lens, at least one of a number of times for guiding gaze of the target and degree of a guided gaze angle.

### (Supplementary note 11)

An authentication system described in a supplementary note 11 is the authentication system according to the supplementary note 9 or 10, wherein the gaze guiding means changes a direction for guiding gaze of the target on the basis of a center position of the colored contact lens and a center position of a pupil of the target.

### (Supplementary note 12)

An authentication system described in a supplementary note 12 is the authentication system according to any one of supplementary notes 9 to 11, wherein the gaze guiding means changes, on the basis of whether or not the target wears glasses, at least one of a number of times for guiding gaze of the target and degree of a guided gaze angle.

### (Supplementary note 13)

An authentication system described in a supplementary note 13 is the authentication system according to any one of supplementary notes 9 to 12, wherein the gaze guiding means further guides gaze of the target when a value indicating a total of iris areas that are not covered by the colored contact lenses, does not reach a value required in the iris authentication.

### (Supplementary note 14)

An authentication system described in a supplementary note 14 is the authentication system according to any one of supplementary notes 9 to 13, wherein the authentication system further comprises a storage means for associating and storing the target, the colored contact lenses worn by the target, and guiding information associated with guiding gaze of the target by the gaze guiding means, and when the target wears the colored contact lenses associated and stored, the gaze guiding means guides gaze on the basis of the guiding information stored and associated with the target and the colored contact lenses.

### (Supplementary note 15)

An authentication system described in a supplementary note 15 is the authentication system according to any one of supplementary notes 1 to 14, wherein the authentication system further comprises a position changing means for changing a position of an imaging means for capturing the eye of the target in order to capture the eye of the target from the multiple angles.

### (Supplementary note 16)

An authentication system described in a supplementary note 16 is the authentication system according to any one of supplementary notes 1 to 15, wherein the image acquiring means acquires the plurality of images from a plurality of imaging means that are set so that the eye of the target is captured at different angles each other.

### (Supplementary note 17)

An authentication system descried in a supplementary note 17 is the authentication system according to any one of supplementary notes 1 to 16, wherein the authentication system further comprises a biometric authentication means for performing an authentication processing by using biometric information which is different from iris that can be acquired from the plurality of images, when an iris area which is not covered by the colored contact lens is less than a predetermined value.

### (Supplementary note 18)

An authentication apparatus described in a supplementary note 18 is an authentication apparatus comprising: an image acquiring means for acquiring a plurality of images by capturing an eye of a target wearing colored contact lenses from multiple angles; and an iris authentication means for performing iris authentication for the target by using the plurality of images.

### (Supplementary note 19)

An authentication method described in a supplementary note 19 is an authentication method executed by at least one computer, the authentication method comprising: acquiring a plurality of images by capturing an eye of a target wearing colored contact lenses from multiple angles; and performing iris authentication for the target by using the plurality of images.

### (Supplementary note 20)

A recording medium described in a supplementary note 20 is a recording medium on which a computer program making at least one computer execute an authentication method comprising: acquiring a plurality of images by capturing an eye of a target wearing colored contact lenses from multiple angles; and performing iris authentication for the target by using the plurality of images is recorded.

### (Supplementary note 21)

A computer program described in a supplementary note 21 is a computer program making at least one computer execute an authentication method comprising: acquiring a plurality of images by capturing an eye of a target wearing colored contact lenses from multiple angles; and performing iris authentication for the target by using the plurality of images.

This disclosure can be appropriately changed with in a range being not contrary to summaries or ideas of inventions, which can be read from entire of the scope of claims and the specification. Authentication systems, authentication apparatuses, authentication methods and recording media with these changes are included in technical ideas of this disclosure.

### Description of Reference Numerals and Letters

10 Authentication system
11 Processor
18 Camera
21 Pupil
22 Iris
50 Colored contact lens(es)
110 Image acquiring unit
120 Iris authentication unit
125 Authentication result integrating unit
130 Colored contact lens detecting unit
140 Synthesized image generating unit
150 Feature extracting unit
160 Synthesized feature generating unit
170 First determining unit
180 Second determining unit
200 Gaze guiding unit
210 Guidance controlling unit
211 Area determining unit
212 Center determining unit
213 Glasses determining unit
220 Authentication enablement determining unit
230 Guiding information acquiring unit
240 Target information acquiring unit
250 Contact lens information acquiring unit
260 Storing unit
270 Target determining unit
300 Camera position controlling unit
310 Multi-cameras controlling unit
410 Iris visible area specifying unit
420 Biometric information acquiring unit
430 Biometric authentication unit

## Claims

1. An authentication system comprising:
an image acquiring means for acquiring a plurality of images by capturing an eye of a target wearing colored contact lenses from multiple angles; and
an iris authentication means for performing iris authentication for the target by using the plurality of images.

2. The authentication system according to claim 1, wherein
the authentication system further comprises a detecting means for detecting that the target wears the colored contact lenses, and
the iris authentication means performs the iris authentication by using the plurality of images when the target wears the colored contact lenses, and performs the iris authentication by using images, a number of which is less than a number of the plurality of images, when the target does not wear the colored contact lenses.

3. The authentication system according to claim 1 or 2, wherein
the authentication system further comprises an image synthesizing means for generating a synthesized image by synthesizing iris areas that are not covered by the colored contact lenses in the plurality of images, and
the iris authentication means performs the iris authentication for the target by using the synthesized image.

4. The authentication system according to claim 3, wherein the image synthesizing means performs a correction for making size of a pupil in each of the plurality of images uniform, and then generates the synthesized image.

5. The authentication system according to claim 1 or 2, wherein
the authentication system further comprises a feature synthesizing means for generating a synthesized feature by synthesizing features of iris areas that are not covered by the colored contact lenses in the plurality of images, and
the iris authentication means performs the iris authentication by using the synthesized feature.

6. The authentication system according to claim 5, wherein the synthesizing feature means performs a position correction for a plurality of features extracted from each of the plurality of images so that matching degree of features corresponding to common areas is high, and then performs the iris authentication for the target.

7. The authentication system according to any one of claims 1 to 6, wherein the authentication system further comprises a first determining means for determining whether or not the iris authentication for the target is performed by using the plurality of images on the basis of a ratio of iris areas that are not covered by the colored contact lenses, to an entire iris.

8. The authentication system according to any one of claims 1 to 6, wherein the iris authentication system further comprises a second determining means for determining whether or not the iris authentication for the target is performed by using the plurality of images on the basis of a value that is obtained by subtracting a radius of a pupil of the target from a radius of an inner circle of the colored contact lens and a value that is obtained by subtracting the radius of the pupil of the target from a radius of an iris of the target.

9. The authentication system according to any one of claims 1 to 8, wherein the authentication system further comprises a gaze guiding means for guiding gaze of the target in order to capture the eye of the target from the multiple angles.

10. The authentication system according to claim 9, wherein the gaze guiding means changes, on the basis of size of iris area which is not covered by the colored contact lens, at least one of a number of times for guiding gaze of the target and degree of a guided gaze angle.

11. The authentication system according to claim 9 or 10, wherein the gaze guiding means changes a direction for guiding gaze of the target on the basis of a center position of the colored contact lens and a center position of a pupil of the target.

12. The authentication system according to any one of claims 9 to 11, wherein the gaze guiding means changes, on the basis of whether or not the target wears glasses, at least one of a number of times for guiding gaze of the target and degree of a guided gaze angle.

13. The authentication system according to any one of claims 9 to 12, wherein the gaze guiding means further guides gaze of the target when a value indicating a total of iris areas that are not covered by the colored contact lenses, does not reach a value required in the iris authentication.

14. The authentication system according to any one of claims 9 to 13, wherein
the authentication system further comprises a storage means for associating and storing the target, the colored contact lenses worn by the target, and guiding information associated with guiding gaze of the target by the gaze guiding means, and
when the target wears the colored contact lenses associated and stored, the gaze guiding means guides gaze on the basis of the guiding information stored and associated with the target and the colored contact lenses.

15. The authentication system according to any one of claims 1 to 14, wherein the authentication system further comprises a position changing means for changing a position of an imaging means for capturing the eye of the target in order to capture the eye of the target from the multiple angles.

16. The authentication system according to any one of claims 1 to 15, wherein the image acquiring means acquires the plurality of images from a plurality of imaging means that are set so that the eye of the target is captured at different angles each other.

17. The authentication system according to any one of claims 1 to 16, wherein the authentication system further comprises a biometric authentication means for performing an authentication processing by using biometric information which is different from iris that can be acquired from the plurality of images, when an iris area which is not covered by the colored contact lens is less than a predetermined value.

18. An authentication apparatus comprising:
an image acquiring means for acquiring a plurality of images by capturing an eye of a target wearing colored contact lenses from multiple angles; and
an iris authentication means for performing iris authentication for the target by using the plurality of images.

19. An authentication method executed by at least one computer, the authentication method comprising:
acquiring a plurality of images by capturing an eye of a target wearing colored contact lenses from multiple angles; and
performing iris authentication for the target by using the plurality of images.

20. A recording medium on which a computer program making at least one computer execute an authentication method comprising: acquiring a plurality of images, that an eye of a target wearing colored contact lenses is captured from multiple angles; and performing iris authentication for the target by using the plurality of images is recorded.
